(19) Europäisches Patentamt / European Patent Office / Office européen des brevets

(11) **EP 4 779 889 A1**

(12) **EUROPEAN PATENT APPLICATION**
published in accordance with Art. 153(4) EPC

(43) Date of publication:
22.07.2026 Bulletin 2026/30

(21) Application number: 24865919.5

(22) Date of filing: 13.09.2024

(51) International Patent Classification (IPC):
H04B 7/06 (2006.01)    H04W 64/00 (2009.01)
H04W 24/08 (2009.01)    H04B 17/318 (2015.01)
H04W 72/21 (2023.01)    H04W 72/23 (2023.01)

(52) Cooperative Patent Classification (CPC):
H04B 7/0413; H04B 7/06; H04B 17/318;
H04L 5/00; H04W 4/02; H04W 24/08; H04W 24/10;
H04W 64/00; H04W 72/21; H04W 72/23

(86) International application number:
PCT/KR2024/014055

(87) International publication number:
WO 2025/058480 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023 KR 20230123212

(71) Applicants:
• Hyundai Motor Company
  Seoul 06797 (KR)
• Kia Corporation
  Seoul 06797 (KR)
• Seoul National University R&DB Foundation
  Seoul 08826 (KR)

(72) Inventors:
• LEE, Jeong Su
  Hwaseong-si, Gyeonggi-do 18280 (KR)
• HONG, Ui Hyun
  Hwaseong-si, Gyeonggi-do 18280 (KR)
• SUH, Young Kil
  Hwaseong-si, Gyeonggi-do 18280 (KR)
• HAHN, Gene Back
  Hwaseong-si, Gyeonggi-do 18280 (KR)
• KIM, Dong Hwi
  Seoul 08826 (KR)
• KWON, Jeonghyeon
  Seoul 08826 (KR)
• CHOI, Wan
  Seoul 08826 (KR)

(74) Representative: Viering, Jentschura & Partner mbB
Patent- und Rechtsanwälte
Am Brauhaus 8
01099 Dresden (DE)

(54) **METHOD AND APPARATUS FOR BEAM MANAGEMENT IN COMMUNICATION SYSTEM**

(57) A method for a base station according to the present disclosure comprises the steps of: sharing first information and prior information for beamforming with a terminal; on the basis of the prior information, identifying whether or not the terminal is located in a near-field area; if it is identified that the terminal is located in the near-field area, determining, on the basis of the first information, grids to transmit each of near-field beams for beam sweeping and beam focusing; and transmitting a reference signal by beam sweeping each of the near-field beams so that the near-field beams are respectively focused on the determined grids.

【FIG. 16】

```
                            ┌─────────┐
                            │  Start  │
                            └─────────┘
                                 │
                                 ▼
        ┌──────────────────────────────────────────────┐
S1600 ──┤   share necessary information between          │
        │        the base station and the terminal        │
        └──────────────────────────────────────────────┘
                                 │
                                 ▼
        ┌──────────────────────────────────────────────┐
        │       obtain information on a location          │
S1602 ──┤    (distance and angle) of the terminal,        │
        │      and compare the distance of the            │
        │    terminal and the Rayleigh distance           │
        └──────────────────────────────────────────────┘
                                 │
                                 ▼
                         ╱────────────╲           Yes
                       ╱  is the terminal ╲──────────────────┐
S1604 ──            ╱   located in the far-field ╲            │
                     ╲      region?      ╱                    │
                       ╲────────────╱                         │
                             │ No                             │
                             ▼                                ▼
        ┌──────────────────────────┐       ┌──────────────────────────┐
S1620 ──┤   determine the number of  │      │    determine beams to be   │
        │ hierarchical beam sweeping │      │  transmitted to the terminal├── S1610
        │          stages            │      │ based on the angle information│
        └──────────────────────────┘       └──────────────────────────┘
                    │                                     │
                    ▼                                     ▼
        ┌──────────────────────────┐       ┌──────────────────────────┐
        │ determine, based on the    │      │   transmit CSI-RS by sweeping├── S1612
S1622 ──┤ distance and angle         │      │     the determined beams    │
        │ information, grids for      │      └──────────────────────────┘
        │ performing beam sweeping    │                   │
        │ and beam focusing           │                   ▼
        │ of near-field beams         │      ┌──────────────────────────┐
        └──────────────────────────┘       │   receive a first report   ├── S1614
                    │                       │   message from the terminal │
                    ▼                       └──────────────────────────┘
        ┌──────────────────────────┐                     │
S1624 ──┤   transmit CSI-RS by sweeping│                  ▼
        │     the determined beams    │      ┌──────────────────────────┐
        └──────────────────────────┘       │  determine far-field beams  │
                    │                       │  to be used for communication├── S1616
                    ▼                       │ with the terminal based on the│
        ┌──────────────────────────┐       │     first report message    │
S1626 ──┤   receive a second report  │      └──────────────────────────┘
        │   message from the terminal │                   │
        └──────────────────────────┘                      │
                    │                                      │
                    ▼                                      │
        ┌──────────────────────────┐                      │
S1628 ──┤  determine near-field beams │                    │
        │  based on the second report │                    │
        │          message            │                    │
        └──────────────────────────┘                      │
                    │                                      │
                    ▼◄─────────────────────────────────────┘
                ┌─────────┐
                │   End   │
                └─────────┘
```

**Description**

[Technical Field]

The present disclosure relates to an enhance communication technique, and more particularly, to a technique for beam management.

[Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

In the current 5G NR, communication using a first frequency range (FR1, e.g., 410-7125 MHz) and a second frequency range (FR2, e.g., 24250-52600 MHz) is supported. When the FR2 band, which is a millimeter-wave band, is used, the 5G NR system compensates for high path loss and transmits information in a desired direction by employing a massive multiple-input multiple-output (MIMO) system configured with a large number of antennas and by utilizing a beamforming technique suitable for massive MIMO. In a future 6G communication system, it is expected that a terahertz band higher than the millimeter-wave band will be used. Accordingly, in order to compensate for further increased path loss, a 6G communication system considers an antenna structure in which a very large number of antennas are extensively deployed, such as an extra-large scale massive MIMO (XL-MIMO) system. In the XL-MIMO system, a Rayleigh distance representing a boundary between a near field and a far field increases due to the use of a frequency band higher than that of the existing 5G NR and due to an increased antenna array size. As the Rayleigh distance increases, a communication region previously regarded as the far field may become the near field.

In the near-field region of the XL-MIMO system, a new procedure for performing beam sweeping and beam management with a transmitting node of a network, such as a base station, is required.

[Disclosure]

[Technical Problem]

The present disclosure is directed to providing a method and an apparatus for beam management in a near field region in a communication system using XL-MIMO.

[Technical Solution]

A method of a base station, according to a first exemplary embodiment of the present disclosure for achieving the above-described objective, may comprise: sharing first information and prior information for beamforming with a terminal; determining, based on the prior information, whether the terminal is located in a near-field region; based on the terminal being determined to be located in the near-field region, determining grids for transmitting near-field beams for beam sweeping and beam focusing, based on the first information; transmitting a reference signal by sweeping the near-field beams so that the near-field beams are respectively focused on the determined grids; receiving a first measurement report message for the reference signal from the terminal; and determining a near-field beam for communicating with the terminal based on the first measurement report message.

The first information may include information on a number of distance rings for separating the near field region, and the number of the distance rings may be two or more.

The prior information may include a distance from the base station to the terminal, and each of the near-field beams may use a spherical-wave beam.

The method may further comprise: based on the terminal being determined to be located in a far-field region, transmitting the reference signal to the terminal by sweeping far-field beams, beam indexes for identifying the far-field beams being transmitted through the respective far-field beams; receiving a second measurement report message from the terminal, the second measurement report message including a measurement value for the reference signal and index information for each of the far-field beams; and determining a far-field beam for communicating with the terminal based on the second measurement report message.

Each of the far-field beams may use a plane-wave beam.

The prior information may further include information on an angle of the terminal, and a beam sweeping region of the far-field beams may be determined based on the angle of the terminal.

The grids may be respectively determined based on the distance rings, the distance rings being determined based on beam directions for beamforming toward the terminal and predetermined separation distances from the base station.

The prior information may further include information on an angle of the terminal, and the grids for transmitting the near-field beams for beam sweeping and beam focusing may be determined based on the angle of the terminal.

The first information may further include information on a reception power threshold.

The first measurement report message may include two or more measured reference signal received power (RSRP) values equal to or greater than the reception power threshold and beam indexes corresponding to the two or more measured RSRP values, and the near-field beam for communicating with the terminal may be selected as a beam having a beam index corresponding to a highest RSRP value among the two or more measured RSRP values.

The first measurement report message may include two or more RSRP values equal to or greater than the reception power threshold and beam indexes corresponding to the two or more measured RSRP values, the near-field beam for communicating with the terminal may be determined by considering at least one of interference with another communication node or a load of the base station.

The prior information may be obtained from additional information indirectly acquired from a positioning service for the terminal or may be determined based on delay information of a signal received from the terminal.

The method may further comprise: based on a determination of whether the terminal is located in the near-field region being impossible based on the prior information, transmitting the reference signal by sweeping far-field beams for an entire sweeping region of a far-field region; receiving a third measurement report message from the terminal; and based on a received power value included in the third measurement report message corresponding to a far-field beam having a received power equal to or greater than a preset threshold, configuring the far-field beam having the received power equal to or greater than the preset threshold as a beam for communicating with the terminal.

The method may further comprise: based on a received power value included in the third measurement report message not corresponding to a far-field beam having a received power equal to or greater than the preset threshold, determining grids for beam sweeping and beam focusing of near-field beams based on distance rings configured in a beam direction corresponding to the far-field beam having the received power equal to or greater than the preset threshold; transmitting, to the terminal, the reference signal through near-field beam sweeping based on the determined grids; receiving, from the terminal, a fourth measurement report message including a received power value for the reference signal transmitted through the near-field beam sweeping; and determining, based on the fourth measurement report message, a near-field beam having a highest received power value among the near-field beams as the near-field beam for communicating with the terminal.

A base station, according to a first exemplary embodiment of the present disclosure for achieving the above-described objective, may comprise at least one processor, and the at least one processor may cause the base station to perform:

sharing first information and prior information for beamforming with a terminal; determining, based on the prior information, whether the terminal is located in a near-field region; based on the terminal being determined to be located in the near-field region, determining grids for transmitting near-field beams for beam sweeping and beam focusing, based on the first information; transmitting a reference signal by sweeping the near-field beams so that the near-field beams are respectively focused on the determined grids; receiving a first measurement report message for the reference signal from the terminal; and determining a near-field beam for communicating with the terminal based on the first measurement report message.

The first information may include information on a number of distance rings for separating the near field region, and the number of the distance rings may be two or more.

The prior information may include a distance from the base station to the terminal, and each of the near-field beams may use a spherical-wave beam.

The at least one processor may further causes the base station to perform:

based on the terminal being determined to be located in a far-field region, transmitting the reference signal to the terminal by sweeping far-field beams, beam indexes for identifying the far-field beams being transmitted through the respective far-field beams; receiving a second measurement report message from the terminal, the second measurement report message including a measurement value for the reference signal and index information for each of the far-field beams; and determining a far-field beam for communicating with the terminal based on the second measurement report message.

Each of the far-field beams may use a plane-wave beam.

The prior information may further include information on an angle of the terminal, and a beam sweeping region of the far-field beams may be determined based on the angle of the terminal.

The grids may be respectively determined based on the distance rings, the distance rings being determined based on beam directions for beamforming toward the terminal and predetermined separation distances from the base station.

The prior information may further include information on an angle of the terminal, and the grids for transmitting the near-field beams for beam sweeping and beam focusing may be determined based on the angle of the terminal.

The at least one processor may further cause the base station to perform:

based on a determination of whether the terminal is located in the near-field region being impossible based on the prior information, transmitting the reference signal by sweeping far-field beams for an entire sweeping region of a far-field region; receiving a third measurement report message from the terminal; and based on a received power value included in the third measurement report message corresponding to a far-field beam having a received power equal to or greater than a preset threshold, configuring the far-field beam having the received power equal to or greater than the preset threshold as a beam for communicating with the terminal.

The at least one processor may further cause the base station to perform:

based on a received power value included in the third measurement report message not corresponding to a far-field beam having a received power equal to or greater than the preset threshold, determining grids for beam sweeping and beam focusing of near-field beams based on distance rings configured in a beam direction corresponding to the far-field beam having the received power equal to or greater than the preset threshold; transmitting, to the terminal, the reference signal through near-field beam sweeping based on the determined grids; receiving, from the terminal, a fourth measurement report message including a received power value for the reference signal transmitted through the near-field beam sweeping; and determining, based on the fourth measurement report message, a near-field beam having a highest received power value among the near-field beams as the near-field beam for communicating with the terminal.

[Advantageous Effects]

According to the present disclosure, a base station having an XL-MIMO antenna panel can determine a beam to be used by distinguishing between a far-field region and a near-field region, which are electromagnetic wave regions, when performing beamforming toward a terminal. In particular, when prior information is available, the base station can quickly find an optimal beam for communicating with the terminal in the near-field region based on the prior information. When the prior information is angle information, the base station can reduce the number of far-field beams for which reference signals are to be transmitted to determine a far-field beam. In addition, the number of near-field beams for determining a near-field beam can also be reduced. When the prior information is distance information, the base station can quickly determine whether the terminal is located in the far-field region or in the near-field region.

[Description of Drawings]

FIG. 1 is a conceptual diagram illustrating a first exemplary embodiment of a communication system.

FIG. 2 is a block diagram illustrating a first exemplary embodiment of a communication node constituting a communication system.

FIG. 3 is a block diagram illustrating a first exemplary embodiment of communication nodes performing communication.

FIG. 4A is a block diagram illustrating a first exemplary embodiment of a transmission path.

FIG. 4B is a block diagram illustrating a first exemplary embodiment of a reception path.

FIG. 5 is a conceptual diagram illustrating a first exemplary embodiment of a system frame in a communication system.

FIG. 6 is a conceptual diagram illustrating a first exemplary embodiment of a subframe in a communication system.

FIG. 7 is a conceptual diagram illustrating a first exemplary embodiment of a slot in a communication system.

FIG. 8 is a conceptual diagram illustrating a first exemplary embodiment of a time-frequency resource in a communication system.

FIG. 9 is a conceptual diagram illustrating a case in which a terminal communicates with a base station by using a near-field beam and a far-field beam.

FIG. 10 is a flowchart illustrating a procedure for beam management when a base station has no prior information regarding a terminal.

FIG. 11A is a conceptual diagram illustrating a method of sweeping far-field beams at a base station having an XL-MIMO antenna.

FIG. 11B is a conceptual diagram illustrating a region in which beam sweeping is performed based on a number of distance rings and a size of an angle candidate set.

FIG. 11C is a conceptual diagram illustrating a case in which beams are formed to a terminal by an XL-MIMO antenna.

FIG. 12 is a flowchart according to a procedure for beam management when a base station has information on a distance with a terminal.

FIG. 13 is a conceptual diagram illustrating a method of transmitting near-field beams through beam sweeping at a base station having an XL MIMO antenna when a distance between the base station and a terminal is known.

FIG. 14 is a flowchart according to a procedure for beam management when a base station has information on a relative angle with a terminal.

FIG. 15 is a conceptual diagram illustrating a method of sweeping and transmitting near-field beams when a base station having an XL-MIMO antenna knows information on an angle with a terminal.

FIG. 16 is a flowchart according to a procedure for beam management when a base station has location information of a terminal.

FIG. 17 is a conceptual diagram illustrating a method of sweeping and transmitting near-field beams when a base station having an XL-MIMO antenna knows location information of a terminal.

FIG. 18A is a simplified flowchart of a procedure for selecting an optimal beam between a base station and a terminal according to the first exemplary embodiment of the present disclosure.

FIG. 18B is a simplified flowchart of a procedure for selecting an optimal beam between a base station and a terminal according to the second exemplary embodiment of the present disclosure.

FIG. 18C is a simplified flowchart of a procedure for selecting an optimal beam between a base station and a terminal according to the third exemplary embodiment of the present disclosure.

FIG. 18D is a simplified flowchart of a procedure for selecting an optimal beam between a base station and a terminal according to the fourth exemplary embodiment of the present disclosure.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher-layer signaling, MAC signaling, and physical (PHY) signaling. A message used for higher-layer signaling may be referred to as a 'higher layer message' or 'higher-layer signaling message'. A message used for MAC signaling may be referred to as a 'MAC message' or 'MAC signaling message'. A message used for PHY signaling may be referred to as a 'PHY message' or 'PHY signaling message'. The higher-layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

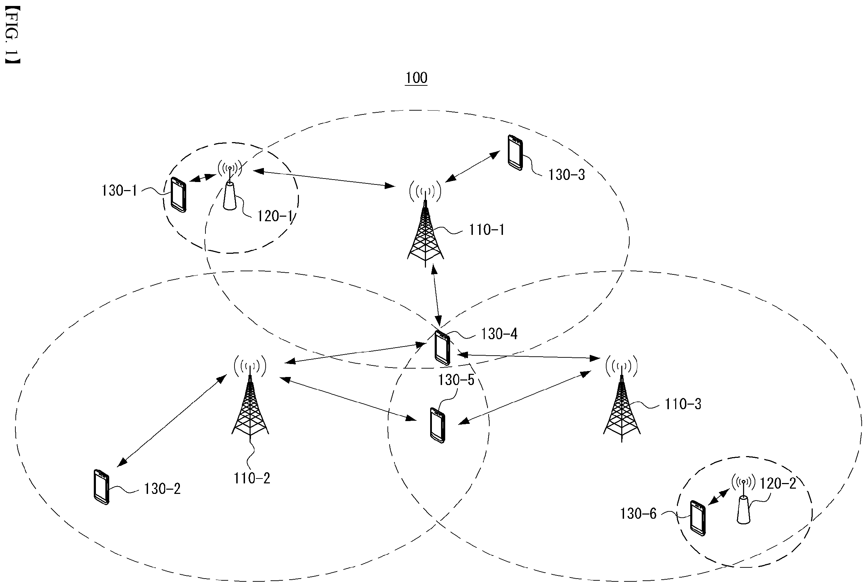

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3rd generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

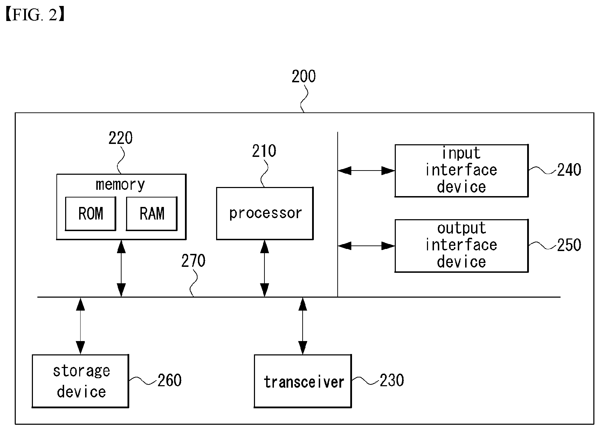

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

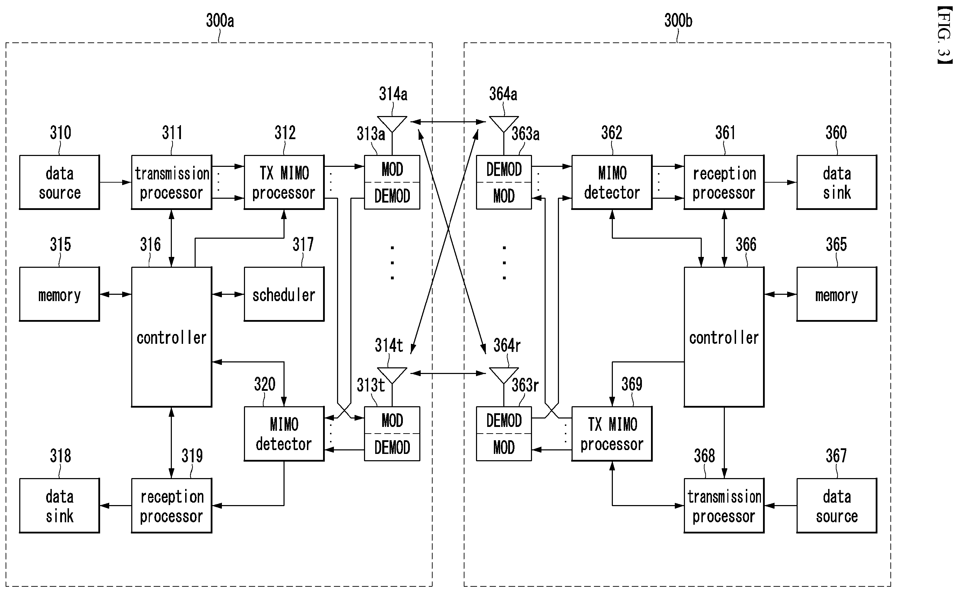

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

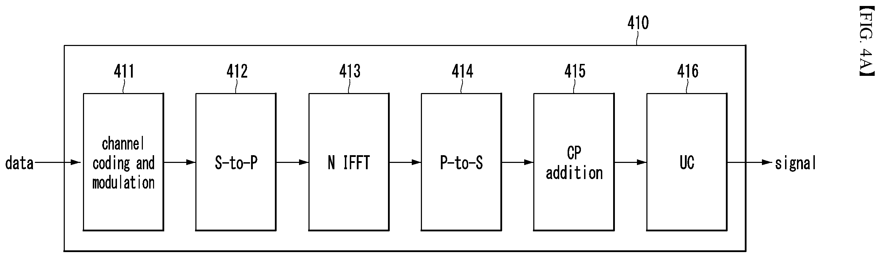

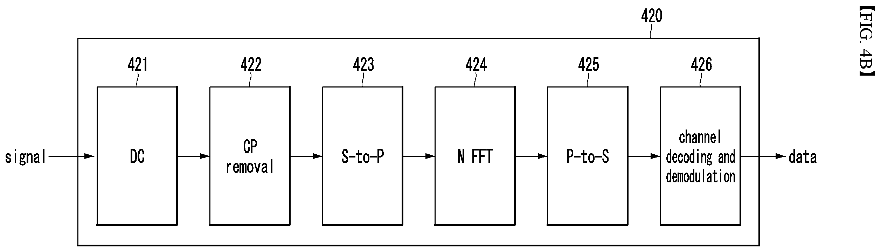

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

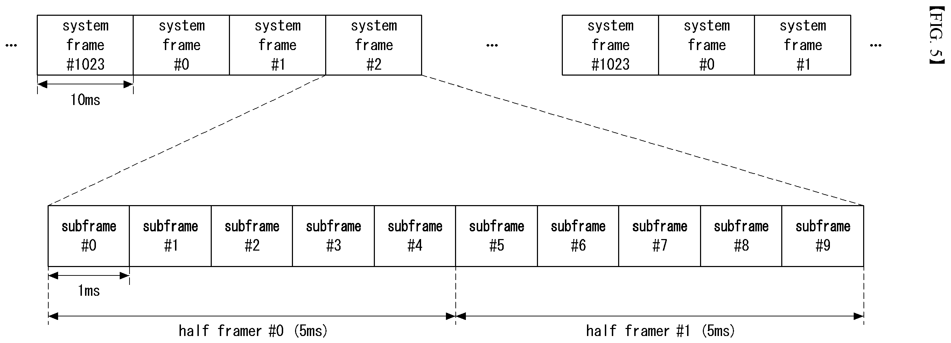

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

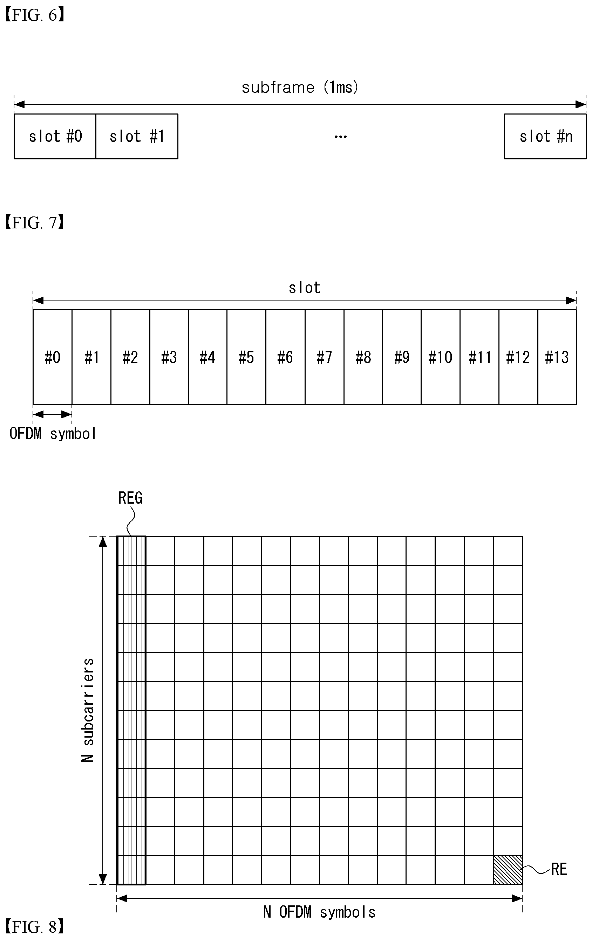

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [μs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., $\mu = 0$), the length of slot may be 1 ms. In this case, one system frame may include 10 slots. When a subcarrier spacing is 30 kHz (e.g., $\mu = 1$), the length of slot may be 0.5 ms. In this case, one system frame may include 20 slots.

When a subcarrier spacing is 60 kHz (e.g., $\mu = 2$), the length of slot may be 0.25 ms. In this case, one system frame may include 40 slots. When a subcarrier spacing is 120 kHz (e.g., $\mu = 3$), the length of slot may be 0.125 ms. In this case, one system frame may include 80 slots. When a subcarrier spacing is 240 kHz (e.g., $\mu = 4$), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, the 5G NR supports communication using a first frequency range (FR1, e.g., 410-7125 MHz) and a second frequency range (FR2, e.g., 24250-52600 MHz). When an FR2 band, which is a millimeter-wave band, is used, the 5G NR system compensates for high path loss and transmits information in a desired direction by employing a massive multiple-input multiple-output (MIMO) system configured with a large number of antennas and by utilizing a beamforming technique suitable for massive MIMO. In a future 6G communication system, it is expected that a terahertz band higher than the millimeter-wave band will be used. Accordingly, in order to compensate for further increased path loss, a 6G communication system considers an antenna structure in which a very large number of antennas are extensively deployed, such as an extra-large scale massive MIMO (XL-MIMO) system. In the XL-MIMO system, a Rayleigh distance representing a boundary between a near-field and a far-field increases due to the use of a frequency band higher than that of the existing 5G NR and due to an increased antenna array size. As the Rayleigh distance increases, a communication region previously regarded as the far-field may become the near-field.

Hereinafter, a 6G communication system is assumed to be a system that uses a terahertz band, and therefore the 6G communication system may be a system that uses a terahertz band. However, a 6G communication system according to the present disclosure may be applied also to a system that uses a gigahertz band. However, it should be noted that a 6G communication system is assumed to be a system that uses a terahertz band for convenience of understanding.

In a far-field region considered in the existing 5G NR, a case is assumed in which an electromagnetic wave is a planar wave, and a phase of the electromagnetic wave observed at each antenna may be expressed as a linear function with respect to an antenna index. In this case, beam sweeping in the existing 5G NR may be performed through beam steering that adjusts an angle of a beam in the angular domain.

However, in a near-field region newly considered in a 6G communication system, a propagation form of an electromagnetic wave may be modeled as a spherical wave rather than a planar wave. When an electromagnetic wave is modeled as a spherical wave, a phase of the electromagnetic wave observed at each antenna element constituting an antenna system may be expressed as a nonlinear function that reflects not only an antenna index but also an incident angle of the electromagnetic wave, a distance between a base station and a terminal, and other parameters. As a result, since such a spherical-wave form of the electromagnetic wave needs to be considered in the 6G communication system unlike the 5G NR system, not only a relative angle of the terminal with respect to the base station but also a distance between the base station and the terminal needs to be considered to adjust phases of antennas so that a beam is focused on a specific location, and this is referred to as 'beam focusing'. Therefore, in a near-field region, a beam sweeping process through beam focusing in the angle-distance domain, rather than the angular-domain beam sweeping process of the existing 5G NR, is essential to achieve higher communication performance.

When near-field beam focusing is considered, a scheme of measuring performance for all candidate beams similarly to the beam management process of 5G NR requires significantly more time resources and computational complexity. The reasons for this may be summarized in three major aspects.

First, in a case of performing beam sweeping for a terminal located in a near-field region, a beam search space of the existing 5G NR system is configured in consideration of beam sweeping in the angular domain, but since beam sweeping is expanded to the angle-distance domain in a 6G communication system, the number of candidate beams for which performance is to be measured increases accordingly.

Second, since a beam is formed using a larger number of antennas compared to the existing 5G NR communication system, a width of the beam becomes narrower, and therefore, in a 6G communication system, performance needs to be measured for a greater number of candidate beams.

Third, unlike a far-field case in which a beamforming vector is calculated using only an angle of a terminal, in order to obtain a near-field beamforming vector, a 6G communication system needs to calculate phases of all antennas based on the angle of the terminal and a distance between the terminal and a base station. Therefore, a beam sweeping process through beam focusing in a near-field requires greater computational complexity than beam sweeping in a far-field.

The present disclosure provides a new beam management process (or procedure or apparatus) capable of reducing time resources and computational complexity to solve problems occurring in the near-field environment as described above. In addition, the present disclosure defines a beam management procedure having low complexity in the near-field environment and parameters for the beam management procedure, and provides methods of using the defined parameters.

An electromagnetic-wave region is divided into a near-field region referred to as a Fresnel region and a far-field region referred to as a Fraunhofer region, and a boundary between the two regions is defined by a Rayleigh distance, which is represented as Equation 1 below with respect to a maximum allowable phase error $\phi$, a size $D$ of an antenna array, and a wavelength $\lambda = c/f$ corresponding to a communication frequency $f$. In addition, the size of the antenna array may be calculated as a sum of an antenna array size $D_{BS}$ of the base station and an antenna array size $D_{UE}$ of the terminal. In addition, the antenna array sizes $D_{BS}$ and $D_{UE}$ represent lengths in an axis having a largest value in a given antenna array.

[Equation 1]

$$R = \frac{\pi D^2}{4\phi\lambda}$$

Here, the maximum allowable phase error $\phi$ represents a maximum phase difference between two different antennas in the given antenna array. When the maximum allowable phase error $\phi$ is greater than $\pi/8$, a Fraunhofer approximation, which is a far-field diffraction equation for propagation in the far-field region, does not hold. Since the Fraunhofer approximation does not hold when the maximum allowable phase error $\phi$ is greater than $\pi/8$, and it becomes difficult to model propagation in a planar-wave form, which was assumed in the far-field region of the existing communication system. Therefore, when the maximum allowable phase error is greater than $\pi/8$, expressing a phase of an electromagnetic wave observed at each antenna as a linear function with respect to an antenna index becomes impossible, and the phase of the antenna needs to be expressed as a nonlinear function that reflects the antenna index, an incident angle of the electromagnetic wave, a distance between the base station and the terminal, and other parameters.

Therefore, when a beamforming technique identical to the existing beamforming technique for the far-field region is applied to the near-field region, it may be difficult to obtain communication performance expected in the far-field region. In addition, when communication techniques such as initial access, beam management, and resource allocation used in the far-field region are used for the near-field region, performance degradation may occur.

The boundary of the electromagnetic-wave region of Equation 1 when the maximum allowable phase error $\phi$ is $\pi/8$, that is, the Rayleigh distance R, may be expressed in a simplified form as Equation 2 below.

[Equation 2]

$$R = \frac{2D^2}{\lambda}$$

A physical meaning of Equation 2 may be interpreted as guaranteeing that for a signal received from an object located at a distance of $\frac{2D^2}{\lambda}$ or greater, a phase difference between two different antennas does not exceed π/8. In other words, when performing beamforming for a terminal located farther than the Rayleigh distance R, the base station may use a planar-wave assumption for beamforming.

In the 5G NR standard that is currently being commercialized and standardized, a beam management procedure is configured with three stages of an initial beam establishment, a beam adjustment, and a beam failure recovery. Among these, the initial beam establishment and the beam adjustment use a scheme of selecting a beam combination having a highest reference signal received power (RSRP) value among possible transmit-receive beam combinations by using beam sweeping. The beam sweeping in 5G NR assumes that a terminal is located in the far-field region. The base station forms beams in the angular domain through beam steering and receives RSRP values for the respective beams from the terminal. The base station may compare the received RSRP values and select an optimal transmit beam or an optimal receive beam.

However, in a 6G communication system that uses a higher frequency than 5G NR and uses an antenna array larger than an antenna array used in 5G NR, the Rayleigh distance increases. Therefore, in a 6G communication system, a communication region is defined as a near-field and a far-field. In the near-field region, unlike in the far-field region, a distance between a transmitter and a receiver needs to be considered in addition to an angle of an electromagnetic wave. In other words, in the near-field region, a beam sweeping process that considers both the angular domain and the distance domain may be performed through a beam focusing technique in which a beam is concentrated on one region in space.

When a beam sweeping scheme used in an electromagnetic-wave region is classified according to a far-field or a near-field, a distinction between a near-field beam sweeping scheme and a far-field beam sweeping scheme may be made based on whether the distance between the transmitter and the receiver is reflected in an array response vector used for calculating a beamforming vector. Here, the array response vector may refer to a vector representing phases of signals transmitted (or received) by antenna elements of a transmit or receive antenna. When the array response vector is expressed by using only a propagation direction without the distance information, a far-field beamforming vector may be calculated and far-field beam sweeping may be performed. On the other hand, when each antenna element of the array response vector reflects not only the propagation direction but also the distance information, a near-field beamforming vector may be calculated and near-field beam sweeping may be performed.

The current 5G NR standard does not consider the near-field beam sweeping process. Therefore, when performing a beam management process in a future 6G communication system, a procedure is required in which the base station selects an electromagnetic-wave region suitable for a current terminal environment and requirements of a terminal by considering characteristics of the far-field region and the near-field region and selects beam sweeping suitable for the electromagnetic-wave region.

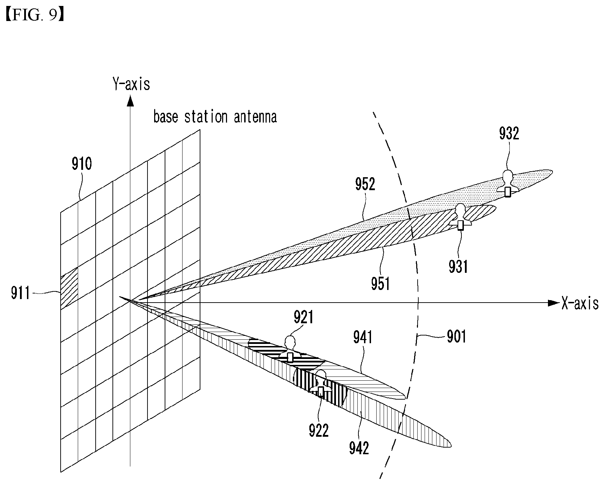

FIG. 9 is a conceptual diagram illustrating a case in which a terminal communicates with a base station by using a near-field beam and a far-field beam.

As shown in FIG. 9, a base station (not shown in FIG. 9) may include an XL-MIMO antenna panel 910. The XL-MIMO antenna panel 910 may include a very large number of antenna elements 911. One antenna element may be an X-Pol antenna or a Pol antenna. Since the XL-MIMO antenna panel 910 has a very large number of antenna elements, various types of arrangements may be possible. For example, arrangements on a wall of a large shopping mall, an airport, or a sports stadium may be possible. The base station described in FIG. 9 may include all or some of the components described in FIG. 2 or may further include additional components. For example, the base station may further include one or more interfaces for communicating with a specific network function (NF) of a core network, an interface for communicating with another adjacent base station, and an interface for communicating with other nodes managed by the base station.

In addition, terminals 921, 922, 931, and 932 illustrated in FIG. 9 may include all or some of the components illustrated in FIG. 2. In another example, the terminals 921, 922, 931, and 932 illustrated in FIG. 9 may further include additional components other than all or some of the components illustrated in FIG. 2. For example, at least one of the terminals 921, 922, 931, and 932 may further include user interfaces and/or sensors for user convenience.

As shown in FIG. 9, a direction perpendicular to the XL-MIMO antenna panel 910 is defined as an X-axis, and a planar direction of the XL-MIMO antenna panel 910 is defined as a Y-axis. The terminals 921, 922, 931, and 932 may be located in a far-field region or a near-field region from the XL-MIMO antenna panel 910. Therefore, a region outside a concentric-circle range separated by a certain distance (e.g., Rayleigh distance R 901) in the X-axis direction of the XL-MIMO antenna panel 910 may be the far-field region, and a region inside the concentric-circle range separated by the Rayleigh distance R 901 may be the near-field region. Therefore, the Rayleigh distance R 901 may be a line separating the far-field region and the near-field region. In the example of FIG. 9, the first terminal 921 and the second terminal 922 may be terminals located in the near-field region, and the third terminal 931 and the fourth terminal 932 may be terminals located in the far-field region. The terminals 921, 922, 931, and 932 may receive downlink signals from the base station through beams formed by the XL-MIMO antenna panel 910, such as at least one channel among a broadcast channel, a control channel, or a data channel. In addition, the terminals 921, 922, 931, and 932 may transmit uplink signals to the base station.

For example, the first terminal 921 located in the near-field region may receive signals from the base station through a first beam 941 based on a near-field beamforming scheme, and the second terminal 922 may also receive signals from the base station through a second beam 942 based on the near-field beamforming scheme. In addition, the third terminal 931 located in the far-field region may receive signals from the base station through a third beam 951 based on a far-field beamforming scheme, and the fourth terminal 932 may receive signals from the base station through a fourth beam 952 based on the far-field beamforming scheme.

When a terminal is located in the far-field region, the base station may perform beam steering for the far-field region through a beamforming vector corresponding to the far-field region. On the other hand, when a terminal is located in the near-field region, the base station may perform beam steering for the near-field region and beam focusing for the near-field region. The base station may perform beam steering and beam focusing for a terminal in the near-field region, and because beam focusing needs to be performed particularly in correspondence with the location of the terminal, a distance between the base station and the terminal may be an important factor. In FIG. 9, the first terminal 921 in the near-field region may receive the first beam 941 from the base station. In FIG. 9, dense hatching of the first beam 941 at the location of the first terminal 921 may indicate that energy of the first beam 941 appears high at the distance where the first terminal 921 is located. Similarly, dense hatching of the second beam 942 at the location of the second terminal 922 may indicate that energy of the second beam 942 appears high at the distance where the second terminal 922 is located.

On the other hand, the beams 951 and 952 transmitted to the far-field region do not show high energy at only a specific location depending on distance. In other words, the third beam 951 and the fourth beam 952 transmitted to the far-field region only have a general characteristic in which energy is inversely proportional to the square of the distance and proportional to the transmit power.

Therefore, since only a transmit power according to a signal arrival distance needs to be considered for the beams 951 and 952 transmitted to the far-field region, only an angle of a beam needs to be adjusted depending on the location of the terminal. However, a beam transmitted to the near-field region concentrates energy at a specific location of the beam, and therefore, the location of the terminal, that is, both the angle and the distance between the base station and the terminal need to be considered.

In a near-field beamforming vector, a phase of each antenna is expressed as a nonlinear function reflecting not only an antenna index but also an incidence angle of the electromagnetic wave, a distance between the base station and the terminal, and so on. Therefore, in case of a near-field beam, a distance at which beam energy is concentrated may be controlled based on a nonlinear function referred to as a distance ring. In a polar coordinate system defined by a relative angle $\theta$ from the base station or the XL-MIMO antenna panel 910 located at an origin and a distance r from the base station, a distance ring may be expressed as in Equation 3 below.

[Equation 3]

$$\frac{1 - \theta^2}{2r} = \alpha$$

In Equation 3, a constant $\alpha$ may denote a size of the distance ring. A distance ring size value may be determined as two or more values based on the near-field range (region) of the base station. When two or more distance ring size values are given as described above, a distance ring index i may be assigned according to each size of the distance ring. A size of the distance ring may indicate a parameter that determines how far from the origin, that is, from the base station or the XL-MIMO antenna panel 910, a near-field beam can be formed. In a 6G communication system, the base station needs to be capable of forming a plurality of distance rings to control a location at which a near-field beam is focused.

The present disclosure proposes a beam management procedure that is generally applicable when a terminal is located in the far-field region or the near-field region.

When a terminal is located in the far-field region, the base station may divide a service area (i.e., a signal arrival range of the base station in the far-field region) into a plurality of angles based on an angular range of beams that can be generated by the base station. The base station may calculate far-field beamforming vectors corresponding to the divided angles and may perform far-field beam sweeping by sequentially forming beams.

When a terminal is located in the near-field region, the base station may divide a service area based on an angular range and a distance ring range of beams that can be generated. Therefore, even for the same angle, two or more beams need to be formed according to the number of distance rings. The base station may calculate near-field beamforming vectors based on the respective angles and the respective distances. By using values calculated as described above, the base station may generate beams and may perform near-field beam sweeping using the generated beams.

When the base station performs beam sweeping for a terminal located in the near-field region in the same manner as performing beam sweeping in 5G NR, for all combinations of angles and distances, a very large amount of time resources is required. For example, in order to perform near-field beam sweeping, beam focusing needs to be performed for each distance for the same angle, resulting in a requirement for more time resources than in 5G NR beam sweeping.

Therefore, a beam management procedure capable of solving such a problem is required.

In the present disclosure, to reduce time resources and computational complexity required in the beam management process, an entire beam sweeping process may be divided into two steps as follows.

First, far-field beam steering may be performed. Thereafter, near-field beam focusing may be performed.

Far-field beam steering will first be described. The base station may perform beam sweeping by using a plurality of far-field beams. In other words, far-field beams may be formed in the same manner as used in 5G NR, and the respective beams may be transmitted by being swept. Therefore, a terminal may receive far-field beams transmitted by the base station through sweeping, and may sort the beams in descending order from a beam having the best performance among the received beams. Here, beam performance may be determined based on, for example, an RSRP value or a power value corresponding thereto. The terminal may select a predetermined number of beams among the beams sorted in order of beam performance. The terminal may report information on the selected beams to the base station. Therefore, the base station may obtain information on several beams having the best performance through far-field beam steering.

When the terminal is located in the near-field region, the base station may perform near-field beam focusing. In this case, the base station does not perform near-field beam focusing for all angles and all distances, but may perform beam focusing based on angles acquired through the far-field beam steering. Therefore, the base station may perform near-field beam focusing for beams corresponding to angles having communication performance equal to or greater than a predetermined value. The terminal may receive beams from the base station based on the near-field beam focusing. The terminal may select a most optimal beam. The terminal may report the selected optimal beam to the base station. Through this, the base station may determine an optimal beam in the angle-distance domain.

According to the procedure described above, near-field beam sweeping does not need to be performed for beams corresponding to angles having low communication performance in the far-field beam steering process. Therefore, a beam search space may be significantly reduced. Additionally, when the base station has prior information regarding a location of the terminal, the beam search space may be further reduced.

Prior information that the base station can identify regarding a location of the terminal is as follows.

    1) A distance between the base station and the terminal
    2) A relative angle between the base station and the terminal
    3) A distance between the base station and the terminal and a relative angle between the base station and the terminal

Methods by which the base station identifies the distance between the base station and the terminal may include the following. For example, the base station may infer or estimate the distance between the base station and the terminal from information on a propagation delay of a physical random access channel (PRACH) preamble. As another example, the distance between the base station and the terminal may be measured by using a timing-based reference signal such as a positioning reference signal (PRS) or a sounding reference signal (SRS) used in the 5G NR system. As another example, the base station may acquire information on the distance between the base station and the terminal in a form of side information from a positioning service for the terminal. Here, side information may be information indirectly acquired from information obtained from the terminal, the base station, and or a network to provide the positioning service for the terminal. For example, timing information based on PRS or SRS and or location information of the terminal obtained by the terminal using a Global Positioning System (GPS) may be used. The side information referred to in the present disclosure may be referred to as additional information.

In the methods described above, the base station may find an optimal beam by performing beam sweeping for a specific angular range and a specific distance range among angle-distance domain grids based on the prior information. The angle-distance domain grids will be described in detail by referring to drawings.

In this case, beam sweeping may be performed by selecting far-field beam sweeping or near-field beam sweeping suitable for the electromagnetic-wave region of the terminal. The base station may measure an angle between the base station and the terminal through transmission and or reception of a reference signal capable of measuring an angle. As an example of the reference signal, a downlink-angle of departure (DL-AoD) may be measured by using PRS, and an uplink-angle of arrival (UL-AoA) may be measured by using SRS. As another method for measuring an angle between the base station and the terminal, the base station may acquire the angle in the form of side information from the positioning service. The side information may be referred to as additional information as described above. When the base station knows the distance and the angle between the base station and the terminal through the prior information, the base station may find an optimal beam by performing far-field beam steering and near-field beam focusing in the angle-distance domain.

Finally, when the base station knows information regarding the distance and the relative angle between the base station and the terminal, the base station may identify whether the terminal is located in the far-field region or the near-field region by using the distance information. When it is determined that the terminal is located in the far-field region, the base station may find an optimal beam through far-field beam sweeping. When it is determined that the terminal is located in the near-field region, the base station may find an optimal beam by performing near-field beam sweeping for grids corresponding to angles and distances near the location known through the prior information.

In the example described in the present disclosure, RSRP is considered as a communication performance metric for finally selecting beams of the base station and beams of the terminal in the beam selection procedure of the base station and the terminal. However, other information similar thereto may be used. Examples of a performance metric that may be used instead of RSRP may include Reference Signal Received Quality (RSRQ) and Channel Quality Indicator (CQI). In addition, various types of reference signals capable of identifying a channel may be used, and the present disclosure does not impose a particular restriction on signals that may be used to measure the performance metrics.

The present disclosure is directed to a procedure in which the base station and the terminal select an optimal beam for wireless communication. In addition, when selecting an optimal beam, a beam management procedure generally available regardless of whether the terminal is located in the far-field region or the near-field region is described. Additionally, the beam management procedure described in the present disclosure may actively utilize prior information regarding a location of the terminal possessed by the base station. A time required for beam sweeping and a computational complexity may be minimized by using the prior information regarding the location of the terminal.

For this purpose, the present disclosure describes appropriate beam sweeping procedures for each of the four cases below. Cases that may be assumed in the present disclosure are as follows.

(1) A case in which no prior information regarding a location of the terminal is available,
(2) A case in which only information on a distance between the base station and the terminal is known,
(3) A case in which only information on a relative angle between the base station and the terminal is known, or
(4) A case in which location information of the terminal, that is, the relative angle between the base station and the terminal and the distance between the base station and the terminal, is fully known.

The more prior information the base station has regarding the location of the terminal, the more the base station may reduce the number of candidate beams for which performance needs to be measured in the beam-sweeping procedure.

Meanwhile, each of the four assumed cases above assume downlink beam formation, that is, beam formation by the base station toward the terminal. However, a beam management procedure needs to consider both formation of downlink beams as base station beams and formation of uplink beams as terminal beams.

Unlike the conventional 5G system in which only far-field beams can be formed by the base station and the terminal, a 6G system may assume a situation in which not only the base station but also the terminal is able to form both far-field beams and near-field beams. Therefore, for appropriate transmit beam formation and receive beam formation corresponding to an electromagnetic wave region between the base station and the terminal, the base station needs to deliver information on a determined electromagnetic wave region to the terminal before a beam formation procedure of the terminal.

For example, when the base station is able to determine an electromagnetic wave region based on the prior information, the base station may transmit information on the determined electromagnetic wave region to the terminal before the terminal forms beams. Various forms may be possible for delivering the information on the electromagnetic wave region from the base station to the terminal. For example, the base station may provide information on the electromagnetic wave region to the terminal by using a reference signal such as Channel State Information-Reference Signal (CSI-RS). As another example, the base station may newly define RRC signaling to deliver information on the electromagnetic wave region and may transmit information on the electromagnetic wave region to the terminal through the newly defined RRC signaling.

The terminal may perform a terminal beam formation procedure based on the information on the electromagnetic wave region received from the base station. When the terminal supports near-field beam sweeping, the terminal may selectively use far-field beam sweeping or near-field beam sweeping, similarly to the beam formation procedure of the base station, to find an optimal terminal beam. As another example, when the terminal does not support near-field beam sweeping, the terminal may form an optimal terminal beam through far-field beam sweeping in the same manner as the conventional 5G system.

## [First exemplary embodiment: case in which no prior information regarding a location of a terminal is available]

Hereinafter, a beam management method for a case in which the base station has no prior information regarding the terminal is described. The prior information regarding the terminal described below may include at least one of an angle from the XL-MIMO antenna of the base station to the terminal and a distance from the XL-MIMO antenna of the base station to the terminal. Therefore, in the first exemplary embodiment of the present disclosure, the base station may have neither the angle from the XL-MIMO antenna of the base station to the terminal nor the distance from the XL-MIMO antenna of the base station to the terminal.

When the base station has no prior information regarding the terminal, the beam management method according to the present disclosure may be divided into two steps as described above. First, optimal beam(s) may be searched through far-field beam sweeping, and when near-field beam sweeping is required, an optimal beam to be transmitted to the terminal may be selected through the near-field beam sweeping. When near-field beam sweeping is not required, the optimal beam to be transmitted to the terminal may be selected in the far-field beam sweeping step. Specific operations regarding this will be described with reference to the accompanying drawings.

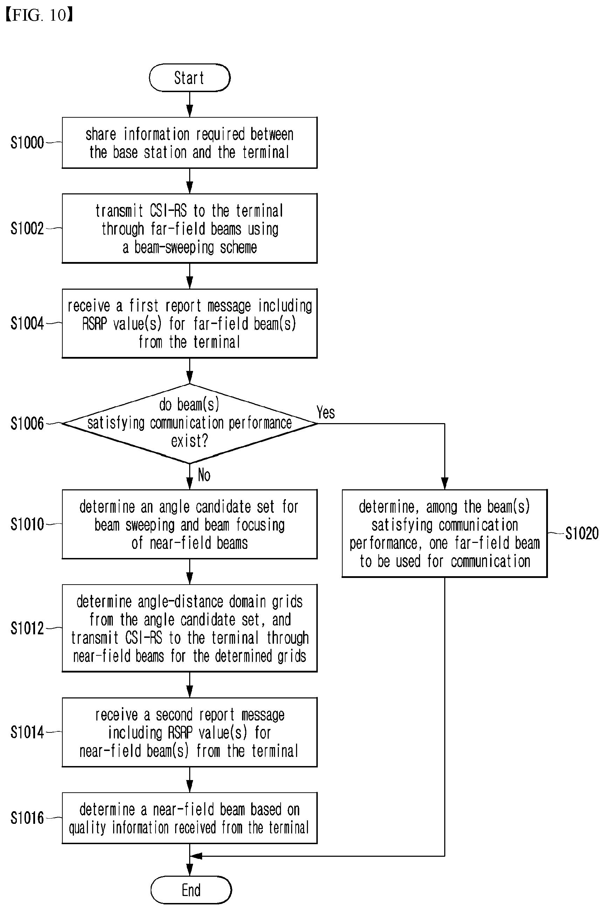

FIG. 10 is a flowchart illustrating a procedure for beam management when a base station has no prior information regarding a terminal.

Prior to describing FIG. 10, a base station may be assumed to be a base station having an XL-MIMO antenna panel. The base station may include all or part of the components of FIG. 2 as described above, and the transceiver 230 may include the XL-MIMO antenna panel. In addition, the base station may further include additional components other than the components illustrated in FIG. 2. For example, the base station may further include an interface for communicating with an NF of a core network, an interface for communicating with adjacent base stations, and an interface for communicating with communication nodes managed by the base station.

A terminal described in FIG. 10 may include all or part of the components of FIG. 2. Additionally, the terminal may further include other components not illustrated in FIG. 2. For example, the terminal may further include various interfaces and sensors for user convenience.

In step S1000, the base station may share information required for beam formation with the terminal. For example, the base station may transmit information on an RSRP threshold to the terminal in advance. The information on the RSRP threshold may be information for determining beam suitability when configuring far-field beams and or near-field beams. When using the two-step beam management method according to the present disclosure, the base station may provide, to the terminal, information on a number of RSRP values to be reported among RSRP values that do not satisfy the RSRP threshold when failing to satisfy the RSRP threshold. In addition, the base station may provide, to the terminal, information on a number of distance rings supported by the base station. Since the base station knows the size of the XL-MIMO antenna panel, when information on a size of an antenna panel of the terminal is available, the base station may calculate and store a Rayleigh distance capable of distinguishing the far-field region and the near-field region. Additionally, the base station may provide the Rayleigh distance to the terminal in advance. The Rayleigh distance may be calculated by Equation 1 or Equation 2 described above, and in the following description, a case of using Equation 2 is assumed.

The information transmitted by the base station to the terminal in step S1000 may be transmitted to the terminal through higher-layer signaling (e.g., one or more of RRC signaling message, MAC-CE, or SIB). For example, when the base station is capable of performing beamforming by distinguishing between the near-field region and the far-field region, the number of distance rings supported by the base station may be transmitted through an SIB or an RRC signaling message.

Two or more RSRP thresholds may be configured based on requirements of a service provided to the terminal and/or a load of the base station. When two or more RSRP thresholds are used, the base station may transmit the two or more RSRP thresholds to the terminal through an RRC signaling message. In addition, the base station may notify, configure, or indicate, through a MAC-CE, an RSRP threshold among the two or more RSRP thresholds, which is intended to be used at a specific time.

In addition to the information described above, additional information may be shared between the base station and the terminal. The information to be shared between the base station and the terminal may be transmitted from the base station to the terminal and or from the terminal to the base station in step S 1000. In this case, the information to be shared by the base station with the terminal may be further transmitted from the base station to the terminal through various signaling messages described above and/or a physical downlink control channel (PDCCH).

In step S1002, the base station may transmit CSI-RS to the terminal through each of far-field beams by using a beam-sweeping scheme. In this case, a beam index or a beam identifier for identifying each of the far-field beams may be transmitted together. The beam index or the beam identifier may be configured in one of two manners. First, when a distance ring index is not used, the most significant bit (MSB) of the beam index may be set to '0' to indicate that the corresponding beam is a far-field beam, or may be set to '1' to indicate that the corresponding beam is a near-field beam. This allows identification of whether the beam is a far-field beam or a near-field beam. When a distance ring index is used, a beam for which a distance ring index is included may be identified as a near-field beam, and a beam for which a distance ring index is not included may be identified as a far-field beam.

Therefore, the terminal may receive CSI-RS transmitted by the base station in step S1002 through each of the far-field beams. The terminal may identify beams based on the beam indexes or the beam identifiers and may measure RSRP values for the CSI-RS transmitted by the base station. The terminal may map and store the beam indexes or the beam identifiers and the measured RSRP values corresponding thereto. In addition, based on the RSRP threshold set in step S1000, the terminal may determine RSRP value(s) and beam index(es) to be included in a first report message. In the following description of all exemplary embodiments, the first report message is described by assuming a case in which measurement report information for far-field beams is transmitted. In addition, measurement report information for near-field beams to be described below is assumed to be included in a second report message. Separation of the first report message and the second report message is merely an assumption to facilitate understanding of the present disclosure and should not be interpreted as limiting the present disclosure. The first report message and the second report message may be implemented by using the same message or may be implemented by using different messages. A specific example thereof will be described below.

For example, when RSRP value(s) equal to or greater than the RSRP threshold received in step S1000 exist among the RSRP values measured for the CSI-RS received from the base station, the terminal may include, in the first report message, the RSRP value(s) equal to or greater than the RSRP threshold and beam index(es) corresponding to the RSRP value(s). When two or more RSRP values equal to or greater than the RSRP threshold exist, only a highest RSRP value may be included in the first report message. As another example, when two or more RSRP values equal to or greater than the RSRP threshold exist, m RSRP values from the highest RSRP value may be included in the first report message. Here, m may be a natural number, and when m is 1, only one highest RSRP value may be included. When m is 2 or more, m RSRP values having highest RSRP values among the RSRP values equal to or greater than the RSRP threshold and beam indexes corresponding to the m RSRP values may be mapped and included in the first report message. m may be set in advance in step S1000.

Meanwhile, when no RSRP value equal to or greater than the RSRP threshold received in step S1000 exists among the RSRP values measured for the CSI-RS received from the base station, the terminal may include, in the first report message, n RSRP values indicated to be reported in step S 1000 and beam indexes corresponding to the n RSRP values. In this case, the RSRP values included in the first report message may be included in descending order from a highest measured RSRP value. Meanwhile, since the terminal has previously received information on the required RSRP performance from the base station, when RSRP value(s) equal to or greater than the required RSRP value exist among the measured RSRP values, the terminal may set a parameter to 'true' and transmit the parameter indicating termination of the beam management procedure. In such a case, the base station and the terminal may determine whether the beam management procedure is terminated only through the parameter indicating termination of the beam management procedure.

In step S1004, the base station may receive, from the terminal, the first report message including the RSRP value(s) for far-field beam(s).

In step S1006, the base station may determine whether the RSRP value(s) measured by the terminal, which are included in the first report message, include an RSRP value greater than the RSRP threshold. The case where the RSRP value(s) measured by the terminal include an RSRP value greater than the RSRP threshold may correspond to a case in which beam(s) satisfying communication performance exist. When beam(s) satisfying communication performance are determined to exist based on a result of step S1006, the base station may proceed to step S1020. When beam(s) satisfying communication performance are determined not to exist based on the result of step S1006, the base station may proceed to step S1010.

In step S1020, the base station may determine, as a beam for communication, one beam among the beam(s) satisfying communication performance. As described above, when only one RSRP value greater than the RSRP threshold is included in the first report message, the base station may determine a far-field beam to be used for communication with the terminal based on the beam index corresponding to the RSRP value.

When two or more RSRP values greater than the RSRP threshold are included in the first report message, the base station may determine an optimal far-field beam by considering one of various conditions. For example, an optimal beam may be selected based on various conditions such as interference with another terminal, interference with an adjacent base station and/or a remote transmission node managed by the base station, and or a load of the base station. Although not illustrated in FIG. 10, when two or more RSRP values are reported in the first report message, the base station may provide information on a finally selected beam to the terminal.

The case in which the base station proceeds from step S1006 to step S1020 may correspond to a case in which the terminal is located in the far-field region of the base station. In other words, this may correspond to a case in which the distance between the base station or the XL-antenna panel and the terminal is equal to or greater than the Rayleigh distance based on Equation 2. Therefore, through the procedure described above, a beam to be used between the base station and the terminal may be determined.

Meanwhile, the case in which the base station proceeds from step S1006 to step S1010 may correspond to a case in which the terminal is located in the near-field region of the base station. In other words, this may correspond to a case in which the distance between the base station or the XL-antenna panel and the terminal is within the Rayleigh distance.

In step S1010, the base station may determine an angle candidate set for beam sweeping and beam focusing of near-field beams. The angle candidate set may be determined based on the RSRP value(s) and the beam index(es) mapped thereto, which are included in the first report message. For example, when no beam having an RSRP value equal to or greater than the RSRP threshold exists among the RSRP values measured in step S1000, the base station may configure n RSRP values having highest RSRP values and beam indexes mapped thereto to be transmitted. Therefore, the terminal may include, in the first report message, n RSRP values arranged in descending order from a highest RSRP value among the measured RSRP values and beam indexes corresponding to the n RSRP values. Therefore, the base station may identify n beams from the highest RSRP value measured by the terminal. The angle candidate set may be determined by using the n beams identified in the above-described manner.

In general, RSRP values measured by the terminal may have the highest RSRP value for a beam and have next highest RSRP values for beams adjacent to the beam. Therefore, the base station may determine the beam having the highest RSRP value and the adjacent beams as an angle candidate set. In other words, steering angles of the beam having the high RSRP value and the adjacent beams may be determined as the angle candidate set.

In step S1012, the base station may determine angle-distance domain grids for the angle candidate set. As described above, for a near-field beam, a phenomenon in which the beam is focused on a specific region occurs based on a distance from the base station and/or the XL-MIMO antenna panel. Therefore, grids focused by distance may be configured for one beam in the near-field region. For example, for the first beam, a distance section from the XL-MIMO antenna panel to a distance r1 may be classified as a first grid, a distance section from the distance r1 to a distance r2 may be classified as a second grid, and in the same manner, a distance section from the distance r2 to a distance r3 may be classified as a third grid. Each grid for the first beam may be based on a separation distance, and may correspond to a distance ring described above. Therefore, for one beam, grids as many as the number of distance rings exist. Therefore, only for beams corresponding to the angle candidate set based on the beam(s) reported from the terminal, the grids based on distance are determined.

In step S1012, the base station may transmit CSI-RS to the terminal through a near-field beam for each determined grid. As described above, since distance-based grids are determined only for angle candidates of specific beams, a significant timesaving effect may be obtained compared to a case in which CSI-RS is transmitted through grids for all beams. In this case, the base station may transmit near-field beam indexes together with the near-field beams. The near-field beam index may be configured by applying two methods as described above. The first method may be a case in which an MSB of the near-field beam index is used to distinguish a near-field beam and a far-field beam. In this case, as described above, by setting the MSB to '1', the base station may notify that the beam transmitted by the base station is a near-field beam. The second method may be a method in which a distance ring index is used, and an identifier for distinguishing a near-field beam and a far-field beam may not be included. A far-field beam does not include a distance ring index. On the other hand, a near-field beam may include a distance ring index. In addition, the distance ring index may identify a distance range of the corresponding beam.

In step S1012, the terminal may receive CSI-RS transmitted through a specific near-field beam for each grid. The terminal may measure an RSRP value of the received CSI-RS. The terminal may store the measured RSRP value by mapping the measured RSRP value with a beam index corresponding to the measured RSRP value. The terminal may generate the second report message including RSRP value(s) exceeding the RSRP threshold received in step S1000 and corresponding beam index(es). In this case, when two or more RSRP values exceed the RSRP threshold, information in which the two or more RSRP values and beam indexes corresponding to the two or more RSRP values are mapped may be included in the second report message based on the value m described above. The terminal may transmit the second report message to the base station.

In step S1014, the base station may receive the second report message including the RSRP value(s) for the near-field beam(s) from the terminal.

In step S1016, the base station may determine a near-field beam based on the RSRP value(s) included in the second report message. In this case, when two or more RSRP values are included in the second report message, the base station may determine an optimal near-field beam by considering one or more of various conditions. For example, an optimal beam may be selected based on various conditions such as interference with another terminal and/or interference with a remote transmission node managed by the base station, or a load of the base station. In addition, although not illustrated in FIG. 10, when two or more RSRP values are reported in the second report message, the base station may provide information on a finally selected beam to the terminal.

Meanwhile, in FIG. 10, a step of identifying whether beam(s) satisfying communication performance exist after step S1014 is not configured. This is because, as a result of steps S1002 to S1006, far-field beams are determined to be not suitable as a beam for transmission to the terminal. Therefore, a beam suitable for the terminal is a near-field beam, and generally, at least one or more of measurement results of the CSI-RS transmitted through the grids in the angle candidate set satisfy the RSRP threshold.

However, even when CSI-RS is transmitted using the beams in the angle candidate set through the grids according to the angle candidate set, a case in which an RSRP value equal to or greater than the RSRP threshold is not measured may exist. Therefore, to prevent such a case, a step of identifying whether beam(s) satisfying communication performance exist in the second report message may be further configured between step S1014 and step S1016. When beam(s) satisfying communication performance do not exist in the second report message, a step of reconfiguring angle-distance domain grids for other beams in the near-field region and re-transmitting CSI-RS for the respective grids may be further configured.

In the exemplary embodiment of FIG. 10, the case in which far-field beams and near-field beams are used to transmit CSI-RS has been described as an example. However, CSI-RS is merely an example for facilitating understanding, and another reference signal may be used. Particularly, when the present disclosure is applied to a 6G communication system, if a reference signal is newly defined for selection of far-field beams and near-field beams, the newly defined reference signal may be used. In addition, in an initial access procedure between the terminal and the base station, a synchronization signal block (SSB) may be used instead of the reference signal.

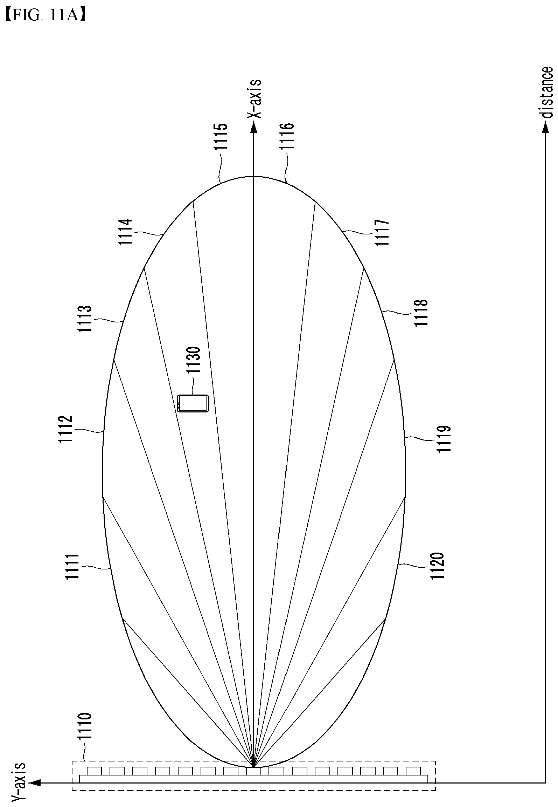

The operations described above with reference to FIG. 10 will be described in more detail with reference to FIGS. 11A to 11C and tables illustrated below.

First, the base station may have information such as in Table 2 below.

[Table 2]

| Required RSRP performance | RSRP threshold = 90dBm |
|---|---|
| Number of distance rings supported by the base station | 4 |
| Size of angle candidate set for near-field beam sweeping | 3 |

The 'required RSRP performance' illustrated in Table 2 may be information provided by the base station to the terminal in step S1000 and may be a value used to identify satisfaction of communication performance in step S1004 of FIG. 10. In the example of Table 2, a case in which the RSRP threshold is set to 90 dBm is illustrated. Therefore, when an RSRP value of CSI-RS received through a specific beam is greater than 90 dBm, the terminal and/or the base station may determine that communication performance is satisfied.

In Table 2, the 'number of distance rings supported by the base station' may be a number for beam focusing in the near-field region. In other words, the number may be the number of distance rings that can be formed in the distance domain when near-field beam sweeping is performed. Information of the number of distance rings may be provided to the terminal in step S1000 described above. In the example of Table 2, a case in which the number of distance rings supported by the base station is 4 is illustrated. Therefore, for one beam, grids may be formed based on four distance rings.

Finally, the 'size of the angle candidate set for near-field beam sweeping' may also be a value configured by the base station to the terminal in step S1000. The size of the angle candidate set for near-field beam sweeping may be the value n described in step S1000, and may be the number of RSRP values that the terminal is configured to report when RSRP values measured for far-field beams do not satisfy the required RSRP performance. In the example of Table 2, a case in which "the size of the angle candidate set for near-field beam sweeping" is 3 is assumed.

In Table 2, a situation in which the size of the angle candidate set is determined as a specific value before a beam sweeping process is considered. However, the size of the angle candidate set may be flexibly determined based on various criteria such as RSRP value(s) measured in the far-field beam sweeping process to be described in Table 3 below or a latency requirement, which is one of requirements for data to be provided to the terminal.

When the size of the angle candidate set is not determined before the beam sweeping process, an additional procedure for determining the size of the angle candidate set may be implemented to be performed after the far-field beam sweeping process and before the near-field beam sweeping process. For example, when no beam having an RSRP value greater than the RSRP threshold exists in the far-field beam sweeping process, the base station may designate an angle candidate set and may perform the near-field beam sweeping only for the corresponding angles. As described above, when the near-field beam sweeping is performed only within the angle candidate set, an advantage exists in that time for determining a beam for communication through beam sweeping can be reduced compared to a case in which beam sweeping is performed for all near-field beams.

FIG. 11A is a conceptual diagram illustrating a method of sweeping far-field beams at a base station having an XL-MIMO antenna.

As shown in FIG. 11A, a base station may be assumed to be a base station having an XL-MIMO antenna panel 1110. In the example of FIG. 11A, an X-axis illustrates a direction in which the XL-MIMO antenna panel 1110 faces when the base station radiates beams through the XL-MIMO antenna panel 1110, and a Y-axis illustrates a direction parallel to a plane of the XL-MIMO antenna panel 1110.

According to the example of FIG. 11A, the base station may sequentially transmit 10 beams 1111, 1112, 1113, 1114, 1115, 1116, 1117, 1118, 1119, and 1120. In other words, the base station may transmit 10 beams by sweeping them. As a more specific example, the base station may transmit the beams to a terminal 1130 by sweeping the beams in the order of the first beam 1111 → the second beam 1112 → the third beam 1113 → the fourth beam 1114 → the fifth beam 1115 → the sixth beam 1116 → the seventh beam 1117 → the eighth beam 1118 → the ninth beam 1119 → the tenth beam 1120. As another example, the base station may transmit the beams to the terminal 1130 by sweeping the beams in the order from the tenth beam 1120 to the first beam 1111. In addition, in FIG. 11A, each far-field beam may transmit CSI-RS and may further include a beam index for identifying each far-field beam.

In the example of FIG. 11A, a case in which the number of beams to be swept is 10 is assumed, but this is merely an example for facilitating understanding, and the number of beams to be swept may be 10 or more.

In the example illustrated in FIG. 11A, a case in which the terminal 1130 is located within a region of the fourth beam 1114 is assumed. The terminal 1130 may measure RSRP values for the CSI-RS transmitted through the respective beams. In other words, the terminal 1130 may measure the RSRP values for the CSI-RS transmitted through the first beam 1111 to the tenth beam 1120. The terminal 1130 may identify whether beam(s) satisfying the required RSRP performance exist (in the case of Table 2, beam(s) having an RSRP value of 90 dBm or more) based on the measurement result of the RSRP values for the CSI-RS transmitted through the first beam 1111 to the tenth beam 1120. When one or more beams satisfying the threshold value exist, the terminal 1130 may transmit a first report message to the base station including information mapping identifier(s) of the beam(s) having an RSRP value equal to or greater than the threshold and the measured RSRP value(s).

When the RSRP value measured for the CSI-RS received through the fourth beam 1114 satisfies the required RSRP performance, the base station may determine the fourth beam 1114 as a far-field beam for communication with the terminal 1130 as described in step S1020 of FIG. 10.

When beam(s) satisfying the required RSRP performance do not exist, the terminal 1130 may transmit the first report message to the base station including measurement information in which a predetermined number n of RSRP values are sequentially selected beginning with the highest RSRP value among the received beams and identifier(s) of beam(s) corresponding the n RSRP values are mapped.

A case in which none of the RSRP values measured for the CSI-RS transmitted through the first beam 1111 to the tenth beam 1120 in FIG. 11A satisfies the required RSRP performance may be illustrated as in Table 3 below.

[Table 3]

| BS far-field beam (beam index) | Comparison result between the RSRP value measured by terminal and the RSRP threshold | Selected as angle candidate set |
|---|---|---|
| BS far-field beam #1 (00000) | RSRP_37 < RSRP threshold | Not selected (False) |
| BS far-field beam #2 (00001) | RSRP_55 < RSRP threshold | Not selected (False) |
| BS far-field beam #3 (00010) | RSRP_77 > RSRP threshold | Selected (True) |
| BS far-field beam #4 (00011) | RSRP_86 > RSRP threshold | Selected (True) |
| BS far-field beam #5 (00100) | RSRP_81 > RSRP threshold | Selected (True) |
| BS far-field beam #6 (00101) | RSRP_61 < RSRP threshold | Not selected (False) |
| BS far-field beam #7 (00110) | RSRP_49 < RSRP threshold | Not selected (False) |
| BS far-field beam #8 (00111) | RSRP_35 < RSRP threshold | Not selected (False) |
| BS far-field beam #9 (01000) | RSRP_29 < RSRP threshold | Not selected (False) |
| BS far-field beam #10 (01001) | RSRP_23 < RSRP threshold | Not selected (False) |

In Table 3, a far-field beam index may be an identifier for identifying a base station (BS) far-field beam. In Table 3, a comparison result of the RSRP measured by the terminal and the RSRP threshold may indicate a comparison result between the required RSRP performance illustrated in Table 2 and the RSRP value measured by the terminal. Finally, in Table 3, 'selected as angle candidate set' may be a field indicating whether the corresponding beam index is included in the first report message. The example of Table 3 may indicate beam indexes selected based on the size of the angle candidate set for near-field beam sweeping illustrated in Table 2 because none of the RSRP values measured at the terminal for the CSI-RS transmitted through all far-field beams satisfies the required RSRP performance. Therefore, according to the example of Table 2, 3 beams may be selected, and beam indexes having 3 RSRP values sequentially beginning with the highest RSRP value measured at the terminal may be included.

Meanwhile, in Table 3, the far-field beam index may be transmitted through a resource indicator such as a CSI-RS resource indicator (CRI). As another example, the far-field beam index may be transmitted to the terminal by an RRC signaling message newly defined to deliver the far-field beam index to the terminal. When the number of far-field beams of the base station is $n_{far}$, distinguish the far-field beams may be calculated by Equation 4 below.

[Equation 4]

$$The\ number\ of\ bits = ceil(\log_2 n_{far}) + 1$$

However, the number of bits used when $n_{far}$ = 1 may be 2. In Table 3, the MSB of the BS far-field beam index may be a bit for informing that the far-field beam is used. Accordingly, since the number of far-field candidate beams used in the sweeping process by the base station is 10, 4 bits may be used to distinguish each candidate beam. The reason for adding '1' in Equation 4 is to indicate that one bit is added in order to distinguish a near-field beam and a far-field beam. Therefore, as described above, each MSB of the beam indexes may allow the terminal 1130 to recognize that a current CSI-RS is transmitted through a far-field beam by using the value of '0'. Accordingly, this may correspond to an example in which 5 bits in total are used to identify the beams.

When the base station transmits CSI-RS through a specific beam, information regarding the beam through which CSI-RS is transmitted, in other words, a base station far-field beam index for the CSI-RS, may be transmitted to the terminal through at least one of a DCI, a MAC-CE, or an RRC reconfiguration message. As another method for transmitting the beam index to the terminal, when the base station defines a new RRC signaling message for transmitting the base station far-field beam index corresponding to the beam through which CSI-RS is transmitted, the newly defined RRC signaling message may be used.

Accordingly, the terminal may identify through which beam the base station transmits the CSI-RS based on the DCI, MAC-CE, RRC reconfiguration message, or newly defined RRC signaling message.

In addition, based on the measured RSRP values illustrated in Table 3 and the value n described in step S1000 of FIG. 10 being 3 as illustrated in Table 2, the first report message may include mapped information as illustrated in Table 4 below.

[Table 4]

| Candidate Beam Index | RSRP value measured by terminal |
|---|---|
| 00010 | RSRP_77 |
| 00011 | RSRP_86 |
| 00100 | RSRP_81 |

In Table 4, an example in which the MSB of the candidate beam index is set to '0' to indicate that the beam is a far-field beam as described above is illustrated. However, as described in the example of FIG. 10, when 10 far-field beams are used, 4 bits may identify 10 beams. When only 4 bits are used for the beam index, the first report message may further include information on a distance ring index. When 4 distance rings are used as in the example of Table 2, the representation of distance ring information may be possible by using 2 bits. However, as described in Equation 4, one bit may be further required in order to distinguish far-field beams for which distance rings are not used. Therefore, when a case that a distance ring is not used is indicated together with distance ring indexes, 3 bits of information may be used. Table 5 below may correspond to an example of information included in the first report message when a distance ring index is used.

[Table 5]

| Distance Ring Index | Candidate Beam Index | RSRP value measured by terminal |
|---|---|---|
| 111 | 0010 | RSRP_77 |
| 111 | 0011 | RSRP_86 |
| 111 | 0100 | RSRP_81 |

The representation '111' for a distance ring index may indicate that a distance ring index is not used. For the first distance ring, a distance ring index may be set to '000', and for the second distance ring, a distance ring index may be set to '001', and for the third distance ring, a distance ring index may be set to '010', and for the fourth distance ring, a distance ring index may be set to '011'.

In the following description, a case is assumed in which information as in Table 4 is used. The base station may receive the first report message including information as in Table 4 from the terminal 1130, and based on the candidate beam index information included in the first report message, the base station may recognize that among the RSRP values measured for the CSI-RS received by the terminal 1130, an RSRP value measured for the CSI-RS transmitted through the fourth beam 1114 is the highest RSRP value, the beam having the second highest RSRP value is the fifth beam 1115, and the beam having the third highest RSRP value is the third beam 1113. In addition, since the RSRP values measured by the terminal 1130 are reported together, the base station may also recognize that all of the third beam 1113, the fourth beam 1114, and the fifth beam 1115 do not satisfy the required RSRP performance.

The first report message described above may utilize various types of messages. For example, the terminal 1130 may transmit the RSRP value(s) for the CSI-RS and beam indexes corresponding to the RSRP value(s) to the base station through a CSI reporting process based on uplink control information (UCI). As another example, in a case of the RSRP reporting process of the CSI-RS transmitted through candidate beams of the base station, the base station may first transmit reporting instruction information for performance of candidate beams of the base station to the terminal 1130 through *UEInformationRequest* in RRC signaling, and the terminal 1130 may receive this and then transmit information regarding RSRP values for the candidate beams of the base station through *UEInformationResponse*. As another example, the reporting instruction information for the candidate beams of the base station may be transmitted to the terminal through an SIB or a newly defined RRC signaling message. Then, as a response to the reporting instruction information received from the base station, the terminal 1130 may report by using a measurement report message or UE assistance information, or when a newly defined RRC signaling message is defined for reporting information according to the present disclosure, the terminal 1130 may report by using the newly defined RRC signaling message.

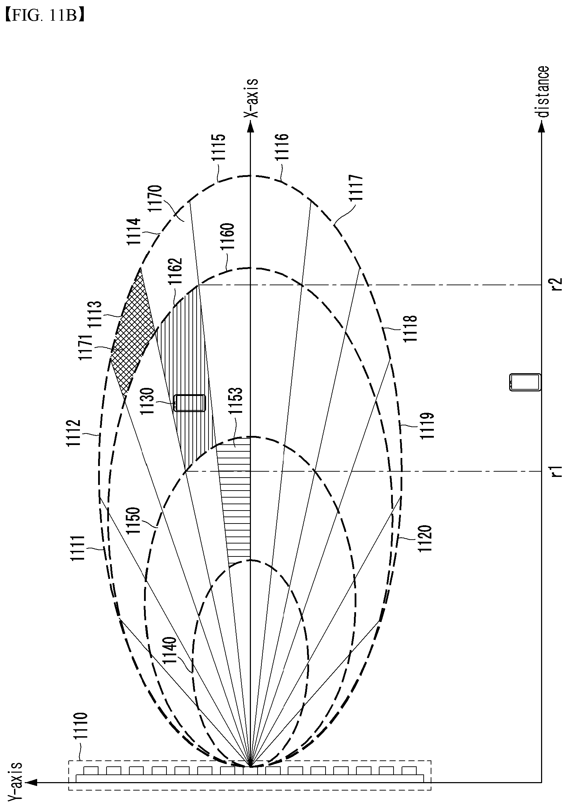

FIG. 11B is a conceptual diagram illustrating a region in which beam sweeping is performed based on a number of distance rings and a size of an angle candidate set.

FIG. 11B may be a conceptual diagram illustrating only a near-field region. Accordingly, a far-field region is assumed to be not illustrated. In FIG. 11B, a case in which a number of distance rings is 4 as illustrated in Table 2 is assumed. More specifically, FIG. 11B illustrates the first distance ring 1140 closest to the base station, the second distance ring 1150 that is second closest to the base station, the third distance ring 1160 that is third closest to the base station, and the fourth distance ring 1170 that is farthest from the base station. In such a case, grids for beam sweeping may be determined as follows.

As described in FIG. 11A, a case is assumed in which the angle candidate set for performing beam sweeping in the near-field region includes the third beam 1113, the fourth beam 1114, and the fifth beam 1115. In this case, three grids may be respectively formed for the third beam 1113, the fourth beam 1114, and the fifth beam 1115 within the region of the first distance ring 1140. More specifically, within the region of the first distance ring 1140, a region in which the CSI-RS is transmitted by using the third beam 1113 may be referred to as a first-3 region, a region in which the CSI-RS is transmitted by using the fourth beam 1114 may be referred to as a first-4 region, and a region in which the CSI-RS is transmitted by using the fifth beam 1115 may be referred to as a first-5 region. As described above, each of the region first-3, the region first-4, and the region first-5 may correspond to one angle-distance grid.

In addition, for the second distance ring 1150, three grids for beam sweeping may be respectively formed by using the third beam 1113, the fourth beam 1114, and the fifth beam 1115. Within the region of the second distance ring 1150, a region in which the CSI-RS is transmitted by using the third beam 1113 may be referred to as a second-3 region, a region in which the CSI-RS is transmitted by using the fourth beam 1114 may be referred to as a second-4 region, and a region in which the CSI-RS is transmitted by using the fifth beam 1115 may be referred to as a second-5 region. As described above, each of the second-3 region, the second-4 region, and the second-5 region may correspond to one angle-distance grid.

In the same manner, for the third distance ring 1160, three grids for beam sweeping may be respectively formed by using the third beam 1113, the fourth beam 1114, and the fifth beam 1115. Within the region of the third distance ring 1160, a region in which the CSI-RS is transmitted by using the third beam 1113 may be referred to as a third-3 region, a region in which the CSI-RS is transmitted by using the fourth beam 1114 may be referred to as a third-4 region, and a region in which the CSI-RS is transmitted by using the fifth beam 1115 may be referred to as a third-5 region. As described above, each of the third-3 region, the third-4 region, and the third-5 region may also correspond to one angle-distance grid.

Finally, for the fourth distance ring 1170, which is the farthest distance ring in the near-field region from the base station, three grids for beam sweeping may be respectively formed by using the third beam 1113, the fourth beam 1114, and the fifth beam 1115. Within the region of the fourth distance ring 1170, a region in which the CSI-RS is transmitted by using the third beam 1113 may be referred to as a fourth-3 region, a region in which the CSI-RS is transmitted by using the fourth beam 1114 may be referred to as a fourth-4 region, and a region in which the CSI-RS is transmitted by using the fifth beam 1115 may be referred to as a fourth-5 region. As described above, each of the fourth-3 region, the fourth-4 region, and the fourth-5 region may also correspond to one angle-distance grid.

Therefore, the total number of grids that the base station has to search may be determined as a product of the number of distance rings that the base station can form and the size of the angle candidate set for near-field beam sweeping. In other words, 12 angle-distance grids may be determined by the base station.

As described in step S1008 of FIG. 10, the base station may transmit CSI-RS to the terminal by performing beam sweeping with the determined angle-distance grids. Therefore, the terminal may receive CSI-RS through beams directed to the angle-distance grids. In addition, the terminal may measure RSRP values for the received CSI-RS.

A case in which a beam is focused on a specific grid will be described with reference to FIG. 11B. For example, beamforming may be performed so that energy is concentrated in a specific region based on an angle and a distance. For example, the base station may perform beam focusing so that energy is concentrated in the second-5 region 1153. The second-5 region 1153 may be a region in which signals are transmitted by using the second distance ring 1150 and the fifth beam 1115.

As described in FIG. 9, in the case of the near-field region, since a region in which energy of a beam is concentrated occurs based on an angle and a distance, even for beams have the same angle, if a distance between the base station and the terminal varies, an RSRP value measured for the CSI-RS by the terminal may be greatly different. In other words, in the case of near-field beams, even when beamforming is performed by using the same fifth beam 1115, an energy concentration level may be greatly different according to a distance variable, in other words, according to the distance ring. When the base station forms a beam so that the beam is focused on the second-5 region 1153, energy in regions of beams at other distances that use the same fifth beam 1115, for example, energy in a region corresponding to the fifth beam 1115 and the first distance ring 1140, may have a very low value compared with energy of the second-5 region 1153. For the same reason, when the base station forms a beam so that the beam is focused on the second-5 region 1153, energy in a region corresponding to the fifth beam 1115 and the third distance ring 1160 may have a very low value compared with the energy of the second-5 region 1153.

Similarly, when the base station performs beam focusing on the third-4 region 1162, energy in regions of other distance rings in which signals are transmitted by using the same fourth beam 1114 may be very low. Here, energy being very low may indicate that an RSRP value measured by the terminal that receives the CSI-RS transmitted by the base station through the corresponding beam may be very low.

The base station may form beams so that the beams are focused from a distance ring region close to the base station among the distance rings based on the distance rings and the angle candidate set as described above, and may perform sweeping with different candidate beams. In other words, the base station may perform beam sweeping for the third beam 1113, the fourth beam 1114, and the fifth beam 1115 so that beams are focused within a range of the first distance ring 1140, and thereafter may perform beam sweeping for the third beam 1113, the fourth beam 1114, and the fifth beam 1115 so that beams are focused within a range of the second distance ring 1150.

In this case, the terminal 1130 may be located in the third-4 region 1162 as illustrated in FIG. 11B. As separately illustrated at a lower part of FIG. 11B, the third-4 region 1162 may be a range from the distance r1 to the distance r2.

Therefore, when the CSI-RS is transmitted toward 12 grids, the terminal may measure an RSRP value for the CSI-RS transmitted toward each grid. When RSRP values measured for the CSI-RS through 12 grids are illustrated together with the respective beam indexes, an example may be as illustrated in Table 6 below.

[Table 6]

| Candidate beam of base station (beam index) | RSRP value | Candidate beam of base station (beam index) | RSRP value |
|---|---|---|---|
| BS near-field beam #1 (10000) | RSRP_82 | BS near-field beam #7 (10110) | RSRP_104 |
| BS near-field beam #2 (10001) | RSRP_89 | BS near-field beam #8 (10111) | RSRP_100 |
| BS near-field beam #3 (10010) | RSRP_92 | BS near-field beam #9 (11000) | RSRP_79 |
| BS near-field beam #4 (10011) | RSRP_91 | BS near-field beam #10 (11001) | RSRP_88 |
| BS near-field beam #5 (10100) | RSRP_84 | BS near-field beam #11 (11010) | RSRP_96 |
| BS near-field beam #6 (10101) | RSRP_99 | BS near-field beam #12 (11011) | RSRP_85 |

In Table 6, an MSB set to '1' in a beam index of a candidate beam of the base station may be a bit for informing that the beam transmitted from the base station is a near-field beam as described above. In addition, a near-field beam index may be transmitted through a resource indicator such as CRI. As another example, the near-field beam index may also be transmitted to the terminal by an RRC signaling message newly defined in order to deliver the near-field beam index to the terminal. When a number of far-field beams of the base station is $n_{near}$, distinguish the near-field beams may be calculated by Equation 5 below.

[Equation 5]

$$The\ number\ of\ bits = ceil(\log_2 n_{near}) + 1$$

The number of bits used when $n_{near} = 1$ may be 2. In Table 6, an MSB in a BS near-field beam index may be a bit for informing that the near-field beam is used. Accordingly, since a number of near-field candidate beams used in a sweeping process by the base station is 12, 4 bits may be used to distinguish each candidate beam. The reason for adding a value of '1' in Equation 5 is to indicate that one bit is added in order to distinguish a near-field beam and a far-field beam. Therefore, as described above, each MSB of the beam indexes may allow the terminal 1130 to recognize that a current CSI-RS is transmitted through a near-field beam by using a value of '1'. Accordingly, this may correspond to an example in which 5 bits in total are used to identify the beams.

When the base station transmits CSI-RS through a specific beam, information regarding the beam through which the CSI-RS is transmitted, in other words, a base station near-field beam index for transmitting the CSI-RS, may be transmitted to the terminal through a DCI, a MAC-CE, or an RRC reconfiguration message. As another method for transmitting the beam index to the terminal, when the base station defines a new RRC signaling message for transmitting the base station near-field beam index corresponding to the beam through which the CSI-RS is transmitted, the newly defined RRC signaling message may also be used.

Accordingly, the terminal may identify through which beam the base station transmits the CSI-RS based on the DCI, MAC-CE, RRC reconfiguration message, or newly defined RRC signaling message.

Meanwhile, a second report message may be transmitted to the base station. The second report message may include m beam index(es) corresponding to RSRP value(s) measured to be equal to or higher than the required RSRP threshold in Table 6 and may include the RSRP value(s). When m is 1, the second report message may include only the highest RSRP value and one beam index corresponding to the highest RSRP value. However, when m is 2 or more, m RSRP values in descending order beginning from the highest RSRP value among the measured RSRP values and beam indexes corresponding to the m RSRP values may be included. The beam indexes may be determined based on the far-field beam indexes and distance rings as illustrated in Table 5 above.

The second report message described above may utilize various types of messages. For example, the terminal 1130 may transmit information on the RSRP value(s) and beam index(es) to the base station through a CSI reporting process using UCI. As another example, in a case of the RSRP reporting process of the CSI-RS transmitted through candidate beams of the base station, the base station may first transmit reporting instruction information for performance of candidate beams of the base station to the terminal 1130 through *UEInformationRequest* in RRC signaling, and the terminal 1130 may receive this and then may transmit information on the RSRP values for the candidate beams of the base station through *UEInformationResponse*. As another example, the reporting instruction information for candidate beams of the base station may be transmitted to the terminal through an SIB or a newly defined RRC signaling message. Then, in response to the reporting instruction information received from the base station, the terminal 1130 may report by using a measurement report message, UE assistance information, or when a newly defined RRC signaling message is defined for reporting information according to the present disclosure, may report by using the newly defined RRC signaling message.

When other factors are not taken into consideration, the base station may determine the base station near-field beam #7 as an optimal beam for communication with the terminal 1130 based on Table 6. In addition, when m is 1, the terminal 1130 may include only a beam index for the near-field beam #7 and the measured RSRP value in the second report message, and may report these to the base station.

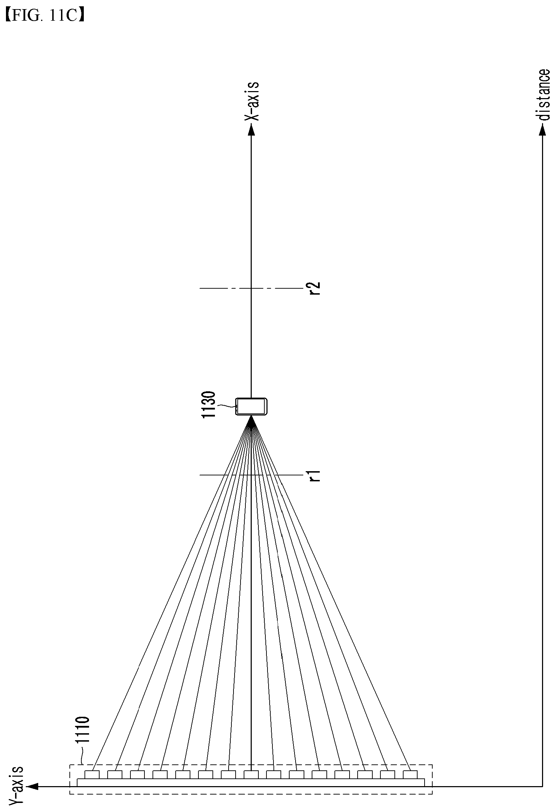

FIG. 11C is a conceptual diagram illustrating a case in which beams are formed to a terminal by an XL-MIMO antenna.

As illustrated in FIG. 11C, when the terminal is located between a distance r1 and a distance r2, beams may be formed to the terminal 1130 through XL-MIMO antenna elements. The configuration illustrated in FIG. 11C may correspond to a case in which the terminal 1130 is located in the near-field region as described in FIG. 11B.

**[Second exemplary embodiment: case in which prior information regarding a distance between a base station and a terminal is available]**

Hereinafter, a beam management method will be described for a case in which a base station has prior information regarding a terminal, i.e., information on a distance from the base station or an XL-MIMO antenna of the base station to the terminal. The base station may determine an electromagnetic wave region in which the terminal is located by utilizing information on the distance between the base station and the terminal. In other words, the base station may determine whether the terminal is located in a near-field region or located in a far-field region by utilizing the distance between the base station and the terminal. The base station may perform a beam management procedure with the terminal based on the determination. A specific operation thereof will be described with reference to the accompanying drawings.

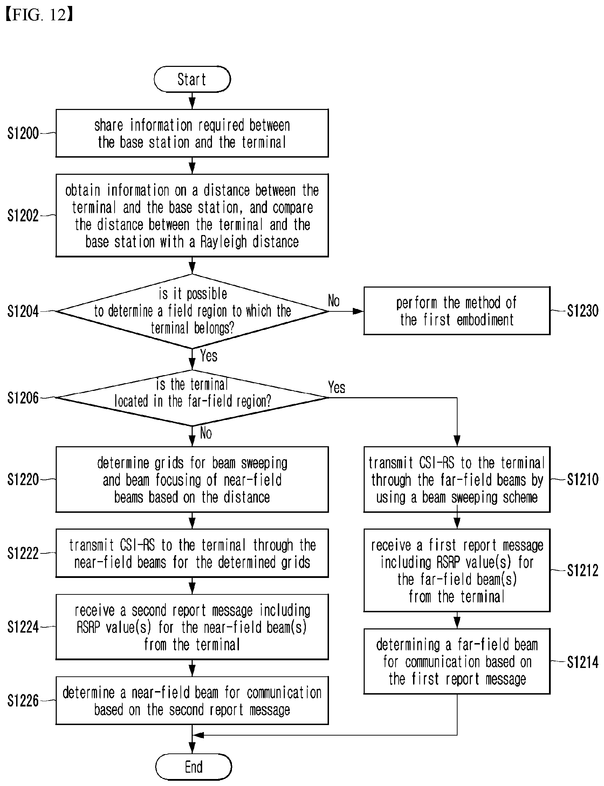

FIG. 12 is a flowchart according to a procedure for beam management when a base station has information on a distance with a terminal.

Prior to describing FIG. 12, a base station may be assumed to be a base station having an XL-MIMO antenna panel. A configuration of the base station may have the same configuration as described in FIG. 10. A terminal may also have the same configuration as described in FIG. 10.

In step S1200, the base station may share prior information required for beamforming with the terminal. For example, the base station may transmit information on an RSRP threshold to the terminal in advance. The information on the RSRP threshold may be information for determining beam suitability when configuring far-field beams and/or near-field beams. The base station may also provide to the terminal information regarding a number of distance rings supported by the base station. Since the base station knows information on a size of the XL-MIMO antenna panel, when the base station also knows a size of an antenna panel of the terminal, the base station may be able to calculate and store a Rayleigh distance capable of distinguishing a far-field region and a near-field region. In addition, the base station may provide the Rayleigh distance to the terminal in advance. The Rayleigh distance may be calculated by Equation 1 or Equation 2 described above, and in the following description, a case is assumed in which Equation 2 is used. In the present disclosure, the Rayleigh distance is merely an example for facilitating understanding of the present disclosure, and when another indicator substituting the Rayleigh distance is configurable, the indicator may also be utilized.

The information transmitted by the base station to the terminal in step S1200 may be transmitted to the terminal through higher layer signaling (e.g., one or more of an RRC signaling message, a MAC-CE, or an MIB). For example, the number of distance rings supported by the base station may be transmitted through an SIB or an RRC signaling message.

The RSRP threshold may be set based on requirements of a service provided to the terminal and/or a load of the base station. The RSRP threshold may be transmitted to the terminal through an RRC signaling message. As another example, the base station may notify, configure, or indicate the RSRP threshold to the terminal through a MAC-CE.

In step S1202, the base station may obtain information on the distance between the base station and the terminal as the prior information. As described above, the base station may obtain information on the distance between the base station and the terminal based on a propagation delay of a PRACH preamble or may obtain information on the distance between the terminal and the base station based on a timing-based reference signal (e.g., PRS and/or SRS) or may obtain information on the distance between the base station and the terminal as side information (or additional information) from a positioning service when the positioning service for the terminal is provided. In step S1202, the base station may compare the distance between the base station and the terminal and the Rayleigh distance. Here, comparison of the obtained distance between the base station and the terminal and the Rayleigh distance may refer to calculation of a difference between the two values. In addition, as described above, since the Rayleigh distance may be calculated by Equation 2, further description is omitted. In the example of FIG. 12, a case is assumed in which the Rayleigh distance is calculated by the base station. However, the Rayleigh distance may also be calculated by the terminal.

When the Rayleigh distance is calculated by the base station, information on the size of the XL-MIMO antenna panel of the base station and information on the size of the antenna array of the terminal may be required, as described above with reference to Equation 1 and Equation 2. Therefore, in step S1200, the base station may receive the information on the size of the antenna array of the terminal from the terminal. The base station may use at least one of various methods as a method by which the base station receives the information on the size of the antenna array of the terminal from the terminal.

For example, the terminal may transmit the information on the size of the antenna array of the terminal to the base station through UCI.

As another example, the base station may transmit, to the terminal through a *UEInformationRequest* message, an instruction to report the information on the size of the antenna array of the terminal. Then, the terminal may transmit the information on the size of the antenna array of the terminal to the base station through a *UEInformationResponse* message in response to the *UEInformationRequest* message.

As another example, when the information on the size of the antenna array of the terminal is defined to be included in UE capability information, the base station may transmit a UE capability information request message to the terminal, and the terminal may transmit the UE capability information to the base station, such that the base station obtains the information on the size of the antenna array of the terminal.

As another example, the base station may transmit, to the terminal through an SIB or a new RRC signaling message, information instructing reporting of the information on the size of the antenna array of the terminal. The terminal that receives the instruction information may transmit the information on the size of the antenna array of the terminal to the base station through a measurement report message, a UE assistance information message, or a new RRC signaling message.

When the Rayleigh distance is calculated by the terminal, the terminal may transmit information on the calculated Rayleigh distance to the base station in step S1200.

In step S1204, the base station may identify whether determination of a field region to which the terminal belongs is possible. For example, the distance between the base station and the terminal, which is obtained by the base station as the prior information, may be denoted as $d_{prior}$, and the Rayleigh distance may be denoted as $R$. In this case, the distance $d_{prior}$ between the base station and the terminal, which is obtained by the base station as the prior information, may not be an accurate value and may include an error. Therefore, it may be necessary to check whether a difference between the two values exists within a preset margin range, as in Equation 6 below.

[Equation 6]

$$-d_{margin} \leq R - d_{prior} \leq d_{margin}$$

When the distance $d_{prior}$ between the base station and the terminal, which is obtained by the base station as the prior information, exists within the range of Equation 6, the base station may not be able to accurately determine whether the terminal belongs to the near-field region or the far-field region based on the Rayleigh distance $R$. Therefore, based on a result of step S1204, when determination of a field region to which the terminal belongs is impossible, the base station may proceed to step S1230. Step S1230 may correspond to a process according to the first exemplary embodiment described above with reference to FIG. 10.

On the other hand, based on the result of step S1204, when identification of the field region to which the terminal belongs is possible, the base station may proceed to step S1206 and may identify whether the terminal is located in the far-field region. A case in which the terminal is located in the far-field region may correspond to a case in which a difference between the distance $d_{prior}$ between the base station and the terminal and the Rayleigh distance $R$ is negative. In other words, the case in which the terminal is located in the far-field region may correspond to a case in which the distance $d_{prior}$ between the base station and the terminal is greater than the Rayleigh distance $R$.

A case in which the terminal is located in the near-field region may correspond to a case in which the difference between the distance $d_{prior}$ between the base station and the terminal and the Rayleigh distance $R$ is positive. In other words, the case in which the terminal is located in the near-field region may correspond to a case in which the distance $d_{prior}$ between the base station and the terminal is smaller than the Rayleigh distance $R$.

Based on the result of step S1206, when the terminal is determined to be located in the far-field region, the base station may proceed to step S1210. On the other hand, based on the result of step S1206, when the terminal is determined to be located in the near-field region, the base station may proceed to step S1220.

Meanwhile, in the above description, the case in which the base station determines whether the terminal is located in the near-field region or located in the far-field region has been assumed. However, the terminal may perform the Rayleigh distance calculation and the region determination together. When the terminal determines, in the above-described manner, an electromagnetic wave region, in other words, whether the terminal is located in the near-field region or whether the terminal is located in the far-field region, the terminal may provide the determined information to the base station. In addition, the terminal may need to receive information on the size of the XL-MIMO antenna panel from the base station in order to calculate the Rayleigh distance.

Therefore, the base station may transmit the information on the size of the XL-MIMO antenna panel to the terminal through a DCI, MAC-CE, or RRC signaling message. In this case, the base station may additionally provide information on a frequency band used for communication. When the additional information on the frequency band is not provided, the terminal may utilize information on a frequency band used in a procedure of acquiring downlink synchronization with the base station. The terminal may transmit, to the base station, electromagnetic wave region determination information described above, in other words, information on whether the terminal is located in the near-field region, whether the terminal is located in the far-field region, or whether determination of the near-field region or the far-field region is impossible.

The information that the terminal transmits to the base station may utilize, for example, fields newly defined in UCI.

As another example, the base station may instruct the terminal to report the electromagnetic wave region determination information through a *UEInformationRequest* message. In this case, the terminal may determine an electromagnetic wave region of the terminal through the above-described method and may transmit the determined information to the base station through a *UEInformationResponse* message.

In step S1210, the base station may transmit CSI-RS to the terminal through each of far-field beams by using a beam sweeping scheme. In this case, a beam index or a beam identifier for identifying each of the far-field beams may be transmitted together with the CSI-RS. Since a configuration method of the beam index or the beam identifier may be the same as that described in the exemplary embodiment of FIG. 10, a redundant description is omitted.

In step S1210, the terminal may receive the CSI-RS transmitted by the base station through the far-field beams. The terminal may identify the beams through the beam indexes or the beam identifiers and may measure RSRP values for the CSI-RS transmitted by the base station. The terminal may map and store the beam indexes or the beam identifiers and the measured RSRP values. Then, based on the RSRP threshold set in step S1200, the terminal may determine RSRP value(s) and beam index(es) to be included in a first report message.

For example, the first report message may include information obtained by mapping RSRP value(s) that are equal to or greater than the RSRP threshold among the RSRP values measured for the CSI-RS received from the base station and beam index(es) corresponding to the RSRP value(s). When there are two or more RSRP values that are equal to or greater than the RSRP threshold, the first report message may include only a highest RSRP value. In another example, when there are two or more RSRP values that are equal to or greater than the RSRP threshold, the first report message may include m RSRP values from the highest RSRP value. Here, m may be a natural number, and when m is 1, only one RSRP value having the highest value may be included in the first report message. When m is 2 or greater, m RSRP values having highest RSRP values among the RSRP value(s) that are equal to or greater than the RSRP threshold and beam indexes corresponding to the m RSRP values may be mapped and included in the first report message. A value of m may be set in step S1000.

In step S1212, the base station may receive the first report message including the RSRP value(s) for the far-field beam(s) from the terminal.

In step S1214, the base station may determine far-field beam(s) for communication based on the first report message. When one RSRP value is included in the first report message, in other words, when only one RSRP value having the highest RSRP value among the RSRP value(s) that are equal to or greater than the RSRP threshold among the measured RSRP values and a beam identifier corresponding to the highest RSRP value are reported, the base station may configure the corresponding beam as a beam for communicating with the terminal in the far-field region.

On the other hand, when two or more RSRP values are included in the first report message, the base station may determine an optimal far-field beam by considering one of various conditions. For example, the base station may select an optimal beam based on various conditions such as interference with another terminal, interference with an adjacent base station and/or interference with a remote transmission node managed by the base station, or a load of the base station. Although not illustrated in FIG. 12, when two or more RSRP values are reported in the first report message, the base station may provide information on a finally selected beam to the terminal.

Meanwhile, when the process proceeds from step S1206 to step S1220, the base station may determine grids for beam sweeping and beam focusing of near-field beams based on information on the distance between the base station and the terminal. The grids may be determined based on beams and distance rings as described above with reference to FIG. 11B.

In step S1222, the base station may transmit CSI-RS to the terminal through beam sweeping and beam focusing for each of the determined grids. In this case, the base station may enable identification of the grids by using a distance ring index and a beam index, or may transmit an identifier of a near-field beam which is distinguishable from a far-field beam for each grid, as described above with reference to FIG. 10.

The method of transmitting beams to the near-field region according to the present disclosure may have an advantage in that required time may be significantly reduced compared to a case of transmitting beams to grids for all distance rings of entire beams, because the base station knows information on the distance between the base station and the terminal and utilizes the distance to determine the grids to which beams are transmitted.

In step S1222, the terminal may receive CSI-RS transmitted for each grid and may measure an RSRP value of the received CSI-RS. The terminal may map and store the measured RSRP value and each beam identifier, or may map and store the measured RSRP value along with a distance ring index and a beam index. Then, the terminal may transmit, to the base station, in a second report message, a highest RSRP value among the measured RSRP values that are equal to or greater than the RSRP threshold and a beam identifier corresponding to the highest RSRP value. The second report message may include two or more measured RSRP values and beam indexes corresponding to the two or more measured RSRP values as described above.

In step S1224, the base station may receive the second report message including the RSRP value(s) for the near-field beam(s) from the terminal.

In step S1226, the base station may determine a near-field beam for communication with the terminal based on the second report message. When only the highest RSRP value among the measured RSRP value(s) and a beam identifier corresponding to the highest RSRP value are included in the second report message, the base station may select the corresponding beam. When two or more measured RSRP values and beam identifiers corresponding to the two or more measured RSRP values are included in the second report message, the base station may determine an optimal near-field beam by considering one or more of various conditions. For example, the base station may select an optimal beam based on various conditions such as interference with another terminal and/or interference with a remote transmission node managed by the base station or a load of the base station. Although not illustrated in FIG. 12, when two or more RSRP values are reported in the second report message, the base station may provide information on a finally selected beam to the terminal.

In the exemplary embodiment of FIG. 12 described above, the case in which the far-field beams and the near-field beams transmit CSI-RS has been described as an example. However, the CSI-RS is merely an example for facilitating understanding, and another reference signal may be used. Particularly, when the present disclosure is applied to a 6G communication system, if a reference signal is newly defined for selection of the far-field beams and the near-field beams, the newly defined reference signal may be used. In addition, when an initial access procedure between the terminal and the base station is performed, SSB may be used in addition to or instead of the reference signal.

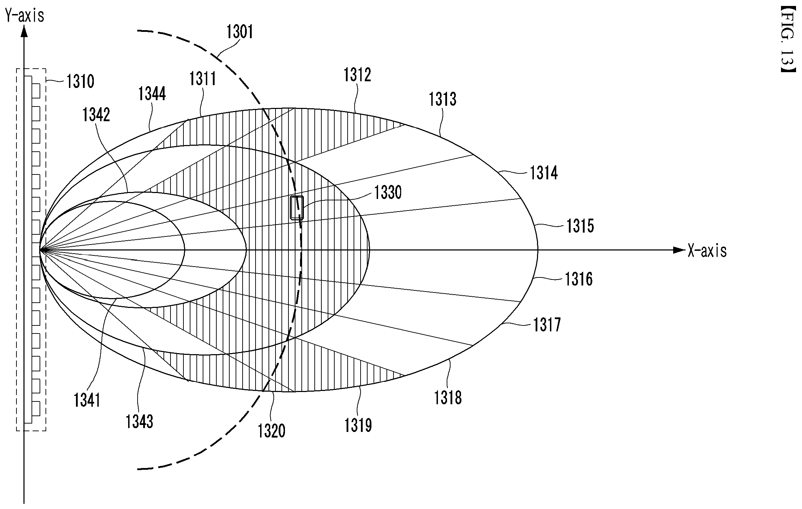

The operations described above with reference to FIG. 12 will be described in further detail with reference to FIG. 13 and tables illustrated below.

FIG. 13 is a conceptual diagram illustrating a method of transmitting near-field beams through beam sweeping at a base station having an XL MIMO antenna when a distance between the base station and a terminal is known.

As shown in FIG. 13, a case is illustrated in which a base station has an XL-MIMO antenna panel 1310. In the example of FIG. 13, an X-axis illustrates a direction viewed by the XL-MIMO antenna panel 1310 when the XL-MIMO antenna panel 1310 radiates beams, and a Y-axis illustrates a direction parallel to a plane of the XL-MIMO antenna panel 1310.

A case is assumed in which the base station knows, as prior information, a distance between a terminal 1330 and the base station. In addition, a case is assumed in which the terminal 1330 is located in a near-field region. A number of beams that can be formed by the base station and a number of distance rings supported by the base station may be set as shown in Table 7 below.

[Table 7]

| Number of beams that can be formed by the base station (angle index) | 10 (j=1,2, ...,10) |
|---|---|
| Number of distance rings supported by the base station (distance ring index) | 4 (i=1,2,3,4) |

FIG. 13 may correspond to a case assuming that the number of distance rings that can be formed by the base station is 4 as illustrated in Table 7. More specifically, FIG. 13 may correspond to a case in which a first distance ring 1341 nearest to the base station, a second distance ring 1342 second nearest to the base station, a third distance ring 1343 third nearest to the base station, and a fourth distance ring 1344 farthest from the base station are formed.

In addition, as illustrated in Table 7, the base station may form a first beam 1311, a second beam 1312, a third beam 1313, a fourth beam 1314, a fifth beam 1315, a sixth beam 1316, a seventh beam 1317, an eighth beam 1318, a ninth beam 1319, and a tenth beam 1320.

In FIG. 13, a semicircle 1301 is illustrated as a dotted line by using a radius which is the distance between the base station and the terminal 1330 and a center point which is a center of the XL-MIMO antenna panel 1310 of the base station. Therefore, the semicircle 1301 illustrated as the dotted line in FIG. 13 may be a line connecting points where the terminal 1330 may exist.

Therefore, the base station may identify grids that overlap the semicircle 1301 connecting points at which the terminal 1330 may exist as illustrated in FIG. 13. In FIG. 13, grids overlapping points through which the semicircle 1301, connecting possible positions of the terminal 1330, passes are shown hatched. These may be calculated as in Equation 7 below.

[Equation 7]

$$\alpha_i \leq \frac{1 - \theta_j^2}{2d_{prior}} \leq \alpha_{i+1}$$

In Equation 7, $\alpha_i$ may denote a distance ring size, and i may denote a distance ring index. $d_{prior}$ may be the distance between the base station and the terminal, which is obtained by the base station as the prior information as described above. In addition, $\theta_j$ may be a beam index of a beam that can be formed by the base station. Specific examples of grids that satisfy conditions of Equation 7, in other words, grids in which the terminal 1330 may be located, are as follows.

For example, the grids may include a grid configured by the first beam 1311 and the fourth distance ring 1344, a grid configured by the second beam 1312 and the third distance ring 1343, a grid configured by the second beam 1312 and the fourth distance ring 1344, a grid configured by the third beam 1313 and the third distance ring 1343, a grid configured by the fourth beam 1314 and the third distance ring 1343, a grid configured by the fifth beam 1315 and the third distance ring 1343, a grid configured by the sixth beam 1316 and the third distance ring 1343, a grid configured by the seventh beam 1317 and the third distance ring 1343, a grid configured by the eighth beam 1318 and the third distance ring 1343, a grid configured by the ninth beam 1319 and the third distance ring 1343, a grid configured by the ninth beam 1319 and the fourth distance ring 1344, a grid configured by the tenth beam 1320 and the third distance ring 1343, and a grid configured by the tenth beam 1320 and the fourth distance ring 1344. The number of these grids may be 12, and in the present disclosure, these grids are referred to as a distance-based candidate grid set.

In the example of FIG. 13, a case has been illustrated in which the distance-based candidate grid set includes only near-field beams corresponding to the prior distance information. However, additional grids may be further included in the distance-based candidate grid set or a smaller number of near-field beams may be included in the distance-based candidate grid set based on at least one of the number of distance rings that can be formed by the base station and latency requirements of the terminal.

The base station may perform beam sweeping in an order of the grids listed above in the distance-based candidate grid set. In another example, the base station may sequentially perform beam sweeping with beams 1312 through 1319 in the third distance ring 1343, which is the nearest, and may subsequently perform beam sweeping with beams 1311, 1312, 1319, and 1320 in the fourth distance ring 1344. In yet another example, the base station may perform beam sweeping with one beam in an order of the grids. For example, in the case of the second beam 1312, the base station may transmit the beam for the third distance ring 1343 and may then transmit the beam for the fourth distance ring 1344.

In the present disclosure, transmission of a beam may refer to a case in which a signal (e.g., CSI-RS or SSB) from which the terminal may measure an RSRP value is transmitted through the beam as described above. A beam identifier may be transmitted together for each beam.

When the base station transmits CSI-RS through each beam, the base station may notify the terminal of information on the beam through which the CSI-RS is transmitted. In other words, the base station may notify the terminal of a near-field beam index of the base station, which transmits the CSI-RS. In this case, the base station may provide information on the near-field beam index of the base station to the terminal through a DCI, MAC-CE, RRC reconfiguration message, or newly defined RRC signaling message for notifying the near-field beam index of the base station.

When the base station transmits CSI-RS through a beam, the base station may notify the terminal of a beam index by using a resource indicator such as a CRI of the CSI-RS as a method of notifying the beam index. In this case, a total number of bits of the beam index may be determined in the same manner as described above with reference to Equation 5.

Therefore, the terminal may identify through which beam the base station transmits the CSI-RS based on the message received from the base station.

As illustrated in FIG. 13, when the base station is able to obtain information on the distance with the terminal as prior information, the base station according to the present disclosure may perform beam sweeping only for grids based on the distance between the base station and the terminal, instead of performing beam sweeping for all beams and all distance rings. In other words, the base station may reduce the beam search space used for near-field beam sweeping. Therefore, a time required to find an optimal beam between the base station and the terminal may be reduced.

The terminal may measure the CSI-RS transmitted with beam focusing to each grid and may store the measured RSRP mapped to the beam index. The measured RSRP values for near-field candidate beams and beam indexes corresponding to the measured RSRP values may be exemplified as shown in Table 8 below.

[Table 8]

| Candidate beams of base station (beam index) | RSRP value | Candidate beams of base station (beam index) | RSRP value |
|---|---|---|---|
| BS near-field beam #1 (0000) | RSRP_43 | BS near-field beam #7 (0110) | RSRP_67 |
| BS near-field beam #2 (0001) | RSRP_55 | BS near-field beam #8 (0111) | RSRP_59 |
| BS near-field beam #3 (0010) | RSRP_61 | BS near-field beam #9 (1000) | RSRP_50 |
| BS near-field beam #4 (0011) | RSRP_84 | BS near-field beam #10 (1001) | RSRP_44 |
| BS near-field beam #5 (0100) | RSRP_97 | BS near-field beam #11 (1010) | RSRP_35 |
| BS near-field beam #6 (0101) | RSRP_82 | BS near-field beam #12 (1011) | RSRP_29 |

In Table 8, as illustrated in FIG. 13, since the number of beams selected as the distance-based candidate grid set is 12, the base station may use 12 near-field candidate beams. Since the number of near-field candidate beams used by the base station is 12, 4 bits may be allocated to distinguish each candidate beam. Compared with the first exemplary embodiment and Table 8 described above, in the second exemplary embodiment of the present disclosure, it is not necessary to distinguish between the near-field beams and the far-field beams of the base station, and therefore a beam index of the candidate beam of the base station may correspond to a case in which one-bit MSB described in the first exemplary embodiment is not set. When a distinction between the near-field beams and the far-field beams is required, the one-bit MSB may be additionally set.

The terminal may store Table 8 and the measured RSRP values of the CSI-RS transmitted for the respective grids. The terminal may store the beam indexes of the candidate beams of the base station corresponding to the stored RSRP values in a mapped manner.

The terminal may transmit information on the RSRP values measured for the CSI-RS and the beam indexes corresponding thereto to the base station through a second report message. In this case, the second report message may use one format among various message types. For example, the second report message may be configured as UCI. When the second reporting message is configured as UCI, the UCI may be transmitted to the base station in a CSI-RS reporting procedure.

In another example, the second report message may be reported in response to a reporting instruction of the base station. For example, when performance reporting of beams is instructed through *UEInformationRequest* in an RRC signaling message by the base station, the terminal may transmit information on the measured RSRP values and the beam indexes thereto to the base station through a *UEInformationResponse* message.

As another example of a response to a request of the base station, the base station may instruct reporting of the measured RSRP values by using an SIB or new RRC signaling. In this case, the terminal may report the measured RSRP values and the beam indexes corresponding thereto to the base station by using a measurement report, UE assistance information, or a newly defined RRC signaling message for reporting the measured RSRP values in response to the reporting instruction.

In this case, as described with reference to FIG. 12, among the RSRP values equal to or greater than the RSRP threshold, one highest RSRP value and a beam index corresponding thereto may be reported. In another example, among the RSRP values equal to or greater than the RSRP threshold, a predetermined number of RSRP values and beam indexes corresponding to the predetermined number of RSRP values may be reported.

**[Third exemplary embodiment: case in which prior information on an angle between a base station and a terminal is available]**

Hereinafter, a beam management method will be described for a case in which a base station has information on an angle from the base station or an XL-MIMO antenna of the base station to a terminal as prior information regarding the terminal. The base station may determine a beam to be used for communication with the terminal by using information on a relative angle from the base station and/or the XL-MIMO antenna of the base station to the terminal. A method of the present disclosure in which information on the relative angle from the base station and/or the XL-MIMO antenna of the base station to the terminal is used may correspond to a method in which the base station efficiently finds a location of the terminal by performing far-field beam sweeping and/or near-field beam sweeping with only beams of a direction corresponding to the angle rather than all beams. In a method of the present disclosure, far-field beam sweeping may be first performed, and an optimal beam may be selected by performing near-field beam sweeping. Additionally, when hierarchical beam sweeping can be performed, beams having higher performance may be found by repeatedly performing more segmented beam sweeping targeting an angle-distance domain region corresponding to beam(s) selected in the previous step. In this case, when hierarchical beam sweeping is performed, a number of hierarchies (a number of times detailed beams are used) may be determined by considering latency requirements of a service provided to the terminal and the like. A specific operation for this will be described with reference to the attached drawings.

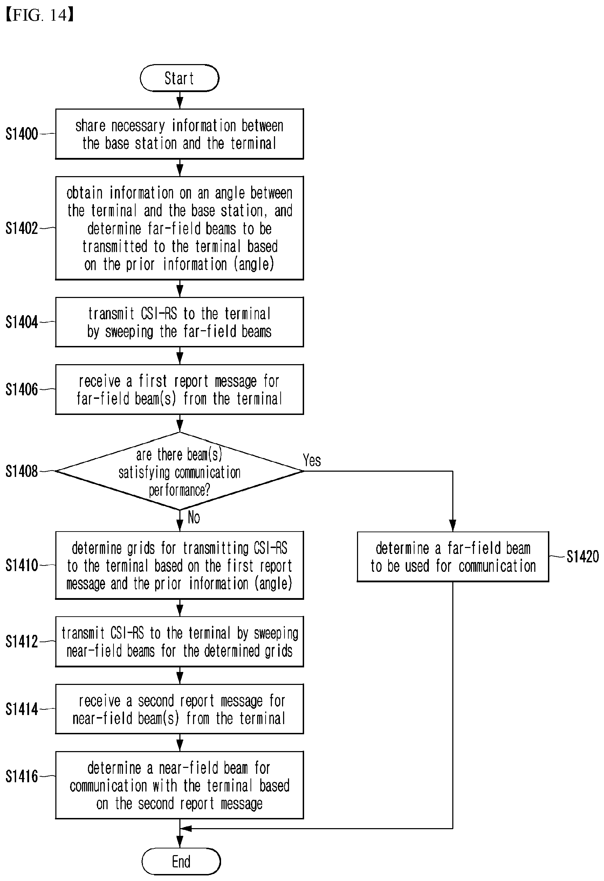

FIG. 14 is a flowchart according to a procedure for beam management when a base station has information on a relative angle with a terminal.

Prior to describing a procedure with reference to FIG. 14, a base station may be assumed to have an XL-MIMO antenna panel. The base station may have the configuration as described with reference to FIG. 10 above. A terminal may also have the configuration as described with reference to FIG. 10 above.

In step S1400, the base station may share information required for beamforming with the terminal. For example, the base station may transmit information on an RSRP threshold to the terminal in advance. The information on the RSRP threshold may be information for determining beam suitability when configuring far-field beams and/or near-field beams. The base station may also provide information on a number of distance rings supported by the base station to the terminal. Since the base station knows a size of the XL-MIMO antenna panel, when the base station knows a size of an antenna panel of the terminal, the base station may calculate and store a Rayleigh distance capable of distinguishing a far-field region and a near-field region. The base station may also provide the Rayleigh distance to the terminal in advance. The Rayleigh distance may be calculated by Equation 1 or Equation 2 above, and in the following description, a case is assumed in which Equation 2 is used. In the present disclosure, the Rayleigh distance is merely an example for facilitating understanding of the present disclosure, and when another index capable of replacing the Rayleigh distance can be set, the index may also be used.

The information transmitted by the base station to the terminal in step S1400 may be transmitted to the terminal through higher-layer signaling (e.g., an RRC signaling message, MAC-CE, or SIB). For example, the number of distance rings supported by the base station may be transmitted through an SIB or RRC signaling message. The RSRP threshold may be set based on requirements of a service provided to the terminal and/or a load of the base station. The RSRP threshold may be transmitted to the terminal through an RRC signaling message. In another example, the base station may notify, configure, or indicate the RSRP threshold to the terminal through a MAC-CE.

In step S1402, the base station may obtain information on an angle between the terminal and the base station. In FIG. 14, for convenience of description, a procedure in which the base station obtains information on the angle between the base station and the terminal in step S1402 is illustrated. However, the base station may also obtain information on the angle between the base station and the terminal as prior information in step S1400. As described above, information on the angle between the base station and the terminal may be measured based on a reference signal capable of measuring the angle such as PRS (DL-AoD) or SRS (UL-AoA). In another example, the base station may obtain information on the angle between the base station and the terminal as side information (or additional information) for a positioning service. In the following description, step S 1402 is described by assuming a case in which the base station reads information stored as prior information.

In step S 1402, the base station may determine a number of far-field beams to be transmitted to the terminal based on information on the angle stored as the prior information. When determining the number of far-field beams based on the angle, the base station may select a far-field beam corresponding to the angle in which the terminal is located and (n-1) far-field beams adjacent to (or closest to) the far-field beam corresponding to the angle in which the terminal is located as a prior angle-based candidate set. A size n of the prior angle-based candidate set may be determined based on various criteria such as latency requirements of a service provided to the terminal or a beam width supported by the base station.

For example, the base station may set a number of far-field beams included in the prior angle-based candidate set to 1 based on the angle obtained from the prior information. In such a case, only one far-field beam corresponding to the angle in which the terminal is located may belong to the prior angle-based candidate set.

In another example, the base station may set the number of far-field beams included in the prior angle-based candidate set to 2 based on the angle obtained from the prior information. In such a case, in addition to one far-field beam corresponding to the angle in which the terminal is located, one far-field beam closest to the one far-field beam corresponding to the angle in which the terminal is located may be included in the prior angle-based candidate set.

In yet another example, the base station may set the number of far-field beams included in the prior angle-based candidate set to 3 based on the angle obtained as the prior information. In this case, in addition to one far-field beam corresponding to the angle in which the terminal is located, one far-field beam closest to the one far-field beam corresponding to the angle in which the terminal is located and one additional far-field beam second closest to the angle in which the terminal is located may be included in the prior angle-based candidate set.

The size of the prior angle-based candidate sets may be determined based on accuracy of the angle and a location of the terminal. When the angle is determined to be very accurate, the base station may transmit only one beam. Even when the angle is accurate, if the terminal is located at an edge of one beam width that the base station can form, the base station may determine to additionally transmit another beam adjacent to the location of the terminal. In another example, when accuracy of the angle is low, the base station may determine two far-field beams adjacent to the far-field beam formed at the location of the terminal as transmission beams.

In step S1404, the base station may transmit CSI-RS by performing beam sweeping with the determined far-field beams (i.e., far-field beams in the prior angle-based candidate set). A beam index or a beam identifier for identifying each of the far-field beams may be transmitted together. A configuration method of the beam index or the beam identifier may be the same as described in the exemplary embodiment of FIG. 10, and therefore redundant description is omitted.

In step S1404, the terminal may receive the CSI-RS transmitted by the base station through the far-field beams. The terminal may identify the beams based on the beam indexes or the beam identifiers, and may measure RSRP values for the CSI-RS transmitted by the base station. The terminal may map and store the beam indexes or the beam identifiers and the measured RSRP values. Then, the terminal may determine RSRP value(s) and beam index(es) to be included in a first report message based on the RSRP threshold set in step S1200.

For example, the first report message may include information in which RSRP value(s) equal to or greater than the RSRP threshold among RSRP values obtained by measuring the CSI-RS received from the base station are mapped to corresponding beam indexes. When two or more RSRP values equal to or greater than the RSRP threshold exist, the first report message may include only a highest RSRP value. In another example, when two or more RSRP values equal to or greater than the RSRP threshold exist, the first report message may include m RSRP values starting from the highest RSRP value. Here, m may be a natural number, and when m is 1, only one highest RSRP value may be included in the first report message. When m is 2 or greater, m RSRP values having the highest RSRP values among the RSRP value(s) equal to or greater than the RSRP threshold are mapped to beam indexes corresponding to the m RSRP values are included in the first report message. m may be preset in step S1400.

In step S1406, the base station may receive the first report message including RSRP value(s) for far-field beam(s) from the terminal.

In step S1406, the base station may identify whether beam(s) satisfying communication performance exist based on the RSRP value(s) included in the first report message. Based on a result of step S1406, when beam(s) satisfying the communication performance exist, the base station may proceed to step S1420.

Meanwhile, when one or more RSRP values are included in the first report message and all RSRP values included in the first report message are equal to or less than the RSRP threshold, the base station may determine that no beam satisfying the communication performance exists. Based on the result of step S1406, when no beam satisfying the communication performance exists, the base station may proceed to step S1410.

In step S1420, the base station may determine a far-field beam for communication with the terminal. For example, when one RSRP value is included in the first report message and the RSRP value is equal to or greater than the RSRP threshold, the base station may determine that a beam satisfying the communication performance exists. When two or more RSRP values are included in the first report message and all RSRP values included in the first report message are equal to or greater than the RSRP threshold, the base station may determine an optimal far-field beam by considering one of various conditions. The various conditions may be, for example, interference with another terminal, interference with an adjacent base station, and/or interference with a remote transmission node managed by the base station, or a load of the base station. Although not illustrated in FIG. 14, when two or more RSRP values are reported in the first report message, the base station may provide information on a finally selected beam to the terminal.

In step S1410, the base station may determine grids to which CSI-RS is to be transmitted to the terminal based on the first report message and the angle, which is the prior information according to the third exemplary embodiment. The grids to which CSI-RS is to be transmitted to the terminal may be determined based on a number of beams and a number of distance rings. The number of beams may be determined based on the RSRP value(s) included in the first report message and the angle. The RSRP value(s) included in the first report message may be only one RSRP value or may be two or more RSRP values. When only one RSRP value is included, the base station may determine only one near-field beam as a transmission beam or may determine two or more near-field beams in the same manner as determining the far-field beams.

When two or more RSRP measurement values are included in the first report message, the base station may determine near-field beams by considering both the RSRP values and the angle, which is the prior information. In another example, the base station may determine a number of near-field beams by considering only the angle without considering the RSRP values included in the first report message.

When the number of near-field beam(s) is determined, grids capable of forming near-field beams may be determined based on the number of distance rings that can be configured by the base station.

In step S1412, the base station may transmit CSI-RS to the terminal by sweeping near-field beams to the determined grids. As described with reference to FIG. 10 above, the base station may allow the grids to be identified by using distance ring indexes and beam indexes, or may transmit, together with each grid, a near-field beam identifier distinguishable from a far-field beam identifier.

The method of transmitting near-field beams according to the present disclosure has an advantage in that a required time is significantly reduced in comparison with a case in which beams are transmitted toward grids for all distance rings of all beams, since grids for transmitting beams are determined by the angle between the base station and the terminal.

In step S1412, the terminal may receive the CSI-RS transmitted for the respective grids through the near-field beams and may measure RSRP values for the received CSI-RS. The terminal may map and store the measured RSRP values and near-field beam identifiers, or may map and store the measured RSRP values together with distance ring indexes and beam indexes. Then, the terminal may include a highest RSRP value among measured RSRP value(s) equal to or greater than the RSRP threshold among the measured RSRP values and a beam identifier corresponding to the highest RSRP value in a second report message and transmit the second report message to the base station. As described above, the second report message may include two or more measured RSRP values and beam indexes corresponding to the measured RSRP values.

In step S1414, the base station may receive the second report message including RSRP value(s) for the near-field beam(s) from the terminal.

In step S1416, the base station may determine a near-field beam for communication with the terminal based on the second report message. When only the highest RSRP value among the measured RSRP value(s) and a beam identifier corresponding to the highest RSRP value are included in the second report message, the base station may select the corresponding beam. When two or more measured RSRP values among the measured RSRP value(s) and beam identifiers corresponding to the two or more measured RSRP values are included in the second report message, the base station may determine an optimal near-field beam by considering one or more of various conditions. For example, the base station may select an optimal beam based on various conditions such as interference with another terminal and/or interference with a remote transmission node managed by the base station or a load of the base station. In addition, although not illustrated in FIG. 14, when two or more RSRP values are reported in the second report message, the base station may provide information on a finally selected beam to the terminal.

In the exemplary embodiment of FIG. 14 described above, a case in which the far-field beams and the near-field beams transmit CSI-RS has been described as an example. However, the CSI-RS is merely an example for facilitating understanding, and another reference signal may be used. In particular, when the present disclosure is applied to a 6G communication system and a reference signal is newly defined for selection of far-field beams and near-field beam selections, the newly defined reference signal may also be used. When an initial access procedure between the terminal and the base station, SSB may be used in addition or instead of the reference signal.

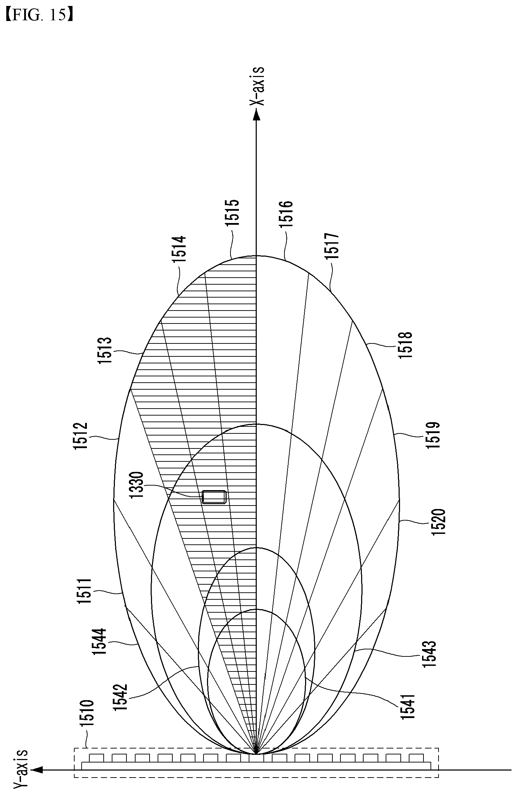

The operations described with reference to FIG. 14 will now be described in more detail with reference to FIG. 15 and tables exemplified below.

FIG. 15 is a conceptual diagram illustrating a method of sweeping and transmitting near-field beams when a base station having an XL-MIMO antenna knows information on an angle with a terminal.

As shown in FIG. 15, a base station may be assumed to be a base station having an XL-MIMO antenna panel 1510. In the example of FIG. 15, an X-axis indicates a direction in which the XL-MIMO antenna panel 1510 faces when the base station radiates beams through the XL-MIMO antenna panel 1510, and a Y-axis indicates a direction parallel to a plane of the XL-MIMO antenna panel 1510.

A case is assumed in which the base station knows information on an angle between a terminal 1530 and the base station as prior information. It is also assumed that the terminal 1530 is located within a near-field region. A number of beams that can be formed by the base station and a number of distance rings supported by the base station may set as in Table 8 below.

[Table 9]

| Relative angle between the base station and the terminal | $\theta_{prior}$ |
|---|---|
| Required RSRP performance | RSRP threshold = 90 dBm |
| The number of distance rings that can be formed by the base station | 4 |
| The size of the prior angle-based candidate set | 3 |

In Table 9, a case of using an RSRP value for representing a minimum required communication performance is exemplified, and a case is assumed in which the RSRP threshold is 90dBm. The base station may transmit CSI-RS through each of far-field beams by sweeping the far-fields. Although near-field beams are exemplified in FIG. 15, a case may be assumed in which far-field beams are used. When far-field beams are beamformed in the same manner as near-field beams, a number of beams that the base station can form in far-field beam directions may be 10 (i.e., far-field beams 1511, 1512, 1513, 1514, 1515, 1516, 1517, 1518, 1519, and 1520). Since an angle of the terminal 1530 is deviated by a certain angle upward along the X-axis as illustrated in FIG. 15, far-field beams may be formed in three near-field beam directions 1513, 1514, and 1515.

The terminal may measure RSRP values for the CSI-RS transmitted through the far-field beams and may report the results to the base station by including the results in a first report message. The base station may determine whether communication is possible through the far-field beams by identifying whether beam(s) with an RSRP value equal to or greater than the RSRP threshold exist among the measured RSRP values based on the first report message received from the terminal. In other words, the base station may identify whether the terminal is located in the far-field region.

When there is no information on beams equal to or greater than the RSRP threshold in the first report message, the base station may determine a prior angle-based candidate set based on the method described in FIG. 14. In the example of FIG. 15, a case is illustrated in which a beam corresponding to $\theta_{prior}$, which is indicated by prior information for the angle between the base station and the terminal, and two far-field beams closest to the beam corresponding to $\theta_{prior}$ are configured as the prior angle-based candidate set for near-field beam sweeping.

According to the example of FIG. 15, 10 near-field beams 1511, 1512, 1513, 1514, 1515, 1516, 1517, 1518, 1519, and 1520 may be formed in the same manner as the far-field beams. The base station may select directions of the far-field beams 1513, 1514, and 1515 as the prior angle-based candidate set for near-field beam sweeping, and FIG. 15 exemplifies this situation.

In addition, in near-field beam sweeping, the base station assumes a case in which a number of distance rings that can be formed in the distance domain is 4 (i.e., 1541, 1542, 1543, and 1544). As described in FIG. 14, a size of the prior angle-based candidate set may be determined based on various criteria such as a beam width supported by the base station or latency requirements of the terminal. By appropriately selecting a size of the prior angle-based candidate set, a time used for beam adjustment and computational complexity may be reduced.

According to the beam management process for the case of the first exemplary embodiment described above in which the base station does not have prior information on a location of the terminal, the base station may need to transmit all possible far-field beams in the far-field beam sweeping process. However, according to the third exemplary embodiment, far-field beams may be swept only for the prior angle-based candidate set, and therefore time resource consumption may be reduced in comparison with a case in which all far-field beams are swept.

[Table 10]

| Candidate beams of base station (Beam index) | Comparison result between measured RSRP and RSRP threshold |
|---|---|
| BS far-field beam #1 (000) | RSRP_41 < RSRP threshold |
| BS far-field beam #2 (001) | RSRP_76 < RSRP threshold |
| BS far-field beam #3 (010) | RSRP_45 < RSRP threshold |

Table 10 exemplifies far-field beam indexes and comparison results for RSRP values measured by the terminal when the third far-field beam direction 1513 is determined as a BS far-field beam #1, the fourth far-field beam direction 1514 is determined as a BS far-field beam #2, and the fifth far-field beam direction 1515 is determined as a BS far-field beam #3.

Since the base station transmits only three far-field beams in total, the base station may configure only three beam indexes. In this case, a case is exemplified in which an MSB is set to a value of '0' to indicate that each beam is a far-field beam.

Therefore, the terminal may measure RSRP values for the CSI-RS received through three far-field beams of the terminal. Then, the terminal may store the RSRP values and beam indexes corresponding to the RSRP values as illustrated in Table 10. Table 10 exemplifies a case in which all measured RSRP values are lower than the RSRP threshold. In other words, a case is exemplified in which the terminal 1530 is located in the near-field region rather than the far-field region. However, when located in the far-field region, at least one RSRP value among the RSRP values may have a value higher than the RSRP threshold.

A beam index for the far-field beam may be transmitted from the base station to the terminal through a resource indicator such as a CRI of the CSI-RS, or may be transmitted from the base station to the terminal by using a newly defined RRC signaling message for transmitting an index for the far-field beam. The indexes for identifying far-field beams that the base station can utilize may be determined in the same manner as described in Equation 4 above.

When the CSI-RS is transmitted, information on a beam through which the CSI-RS is transmitted, in other words, a far-field beam index of the far-field beam through which the base station transmits the CSI-RS, may be transmitted to the terminal through a DCI, MAC-CE, RRC reconfiguration message, or newly defined RRC signaling message. Therefore, the terminal may identify through which beam the base station transmits the CSI-RS based on the far-field beam index.

The comparison results between the measured RSRP values and the RSRP threshold in Table 10 may be information acquired at the terminal. In another example, the comparison results between the measured RSRP values and the RSRP threshold in Table 10 may be transmitted to the base station by being included in the first report message. In yet another example, only one-bit information indicating impossibility of use of far-field beams may be transmitted to the base station by being included in the first report message, based on the comparison results between the measured RSRP values and the RSRP threshold.

The base station may determine whether the terminal is located in the far-field region based on the first report message received from the terminal. In a case such as Table 10, the terminal may be located in the near-field region. Meanwhile, when at least one RSRP value among the measured RSRP values in Table 10 is an RSRP value equal to or greater than the RSRP threshold, the terminal may be located in the far-field region. When the terminal is located in the far-field region, the base station may determine a far-field beam corresponding to an RSRP value equal to or greater than the RSRP threshold as a far-field beam for communication with the terminal.

As exemplified in Table 10, when the RSRP values measured for the CSI-RS transmitted through all far-field beams are less than the RSRP threshold, the base station may determine a beam for communication with the terminal through near-field beams.

The first report message may include various types of information or may be reported to the base station by using various types of messages. A configuration of the first report message will be described first.

For example, the first report message may include measured RSRP values for all far-field beams and beam indexes for the far-field beams.

In another example, the first report message may include a highest RSRP value among the measured RSRP values and a beam index corresponding to the highest RSRP value. In this case, information indicating possibility of using far-field beams may or may not be included.

In another example, the first report message may include a predetermined number of RSRP values from the highest RSRP value among the measured RSRP values and beam indexes corresponding thereto. In this case, information indicating possibility of using far-field beams may or may not be included.

In the present disclosure, among the various forms of the first report message mentioned above, a case in which the first report message includes the highest RSRP value among the measured RSRP values and the beam index corresponding thereto, and information indicating possibility of using far-field beams will be described as an example.

The terminal may select the BS far-field beam #2, which is a far-field beam having the highest RSRP value in Table 10, as a beam for near-field beam sweeping, and may report to the base station by including the index of the BS far-field beam #2 and the RSRP value measured for the CSI-RS transmitted through the BS far-field beam #2 in the first report message. In addition, the first report message may further include a parameter indicating suitability of far-field beams or indicating termination of the beam management procedure. According to the example of Table 10, suitability of far-field beams may be set to 'unsuitable'. According to the example of Table 10, termination of the beam management procedure may be in an impossible state. That termination of the beam management procedure is impossible may indicate that a beam management procedure using near-field beams needs to be additionally performed.

The first report message may be configured as UCI. When the first report message is configured as UCI, the RSRP value of the CSI-RS and the beam index corresponding thereto may be transmitted to the base station during a CSI reporting process.

The reporting process of the RSRP values of the CSI-RS transmitted through the far-field beams may be performed such that the base station delivers, to the terminal, performance reporting instruction information for the far-field beams of the base station through *UEInformationRequest* in an RRC signaling message. The terminal may receive *UEInformationRequest* in the RRC signaling message, and may transmit information on the RSRP values for the far-field beams to the base station through *UEInformationResponse*.

In another example, performance reporting instruction information for the far-field beams of the base station may be transmitted to the terminal through an SIB or a newly defined RRC signaling message. The terminal may report measured information to the base station through a measurement report, UE assistance information, or a newly defined RRC signaling message in response to the performance reporting instruction information for the far-field beams.

When the terminal indicates unavailability of the far-field beams in the first report message with one bit, the base station may determine the same directions as the far-field beams as directions of near-field beams. In addition, the base station may determine grids based on the number of distance rings configured as in Table 9.

As shown in FIG. 15, within the first distance ring 1541, three grids may be determined in the first far-field beam direction 1513, the second far-field beam direction 1514, and the third far-field beam direction 1515. In addition, between the first distance ring 1541 and the second distance ring 1542, three grids may be determined in the first far-field beam direction 1513, the second far-field beam direction 1514, and the third far-field beam direction 1515. Between the second distance ring 1542 and the third distance ring 1543, three grids may be determined in the first far-field beam direction 1513, the second far-field beam direction 1514, and the third far-field beam direction 1515, and lastly, between the third distance ring 1543 and the fourth distance ring 1544, three grids may be determined in the first far-field beam direction 1513, the second far-field beam direction 1514, and the third far-field beam direction 1515. Therefore, the base station may determine a total of 12 grids for forming near-field beams to the terminal.

In another example, based on the first report message reported by the terminal, grids may be generated only for one beam direction based on the distance rings. In the case according to the example of Table 10 described above, the terminal may report to the base station by including only the RSRP value for the BS far-field beam #2 in the first report message. Then, the base station may determine grids for four distance rings for the BS far-field beam #2. In other words, in the second far-field beam direction 1514, one grid within the first distance ring 1541 may be determined, one grid between the first distance ring 1541 and the second distance ring 1542 may be determined, one grid between the second distance ring 1542 and the third distance ring 1543 may be determined, and lastly, one grid between the third distance ring 1543 and the fourth distance ring 1544 may be determined. Therefore, the base station may determine a total of 4 grids for forming near-field beams to the terminal.

Hereinafter, description will be made by assuming a case in which 4 grids are determined.

Table 11 is an example of mapping between measured RSRP values for CSI-RS received through near-field beams and beam indexes corresponding to the measured RSRP values when the base station transmits the CSI-RS through the near-field beams using determined grids.

[Table 11]

| Candidate beams of the base station (Beam index) | RSRP value |
|---|---|
| BS near-field beam #1 (100) | RSRP_40 |
| BS near-field beam #2 (101) | RSRP_65 |
| BS near-field beam #3 (110) | RSRP_94 |
| BS near-field beam #4 (111) | RSRP_71 |

As illustrated in Table 11, the base station near-field beams may have a direction of the near-field beam corresponding to the fourth far-field beam 1514 among the far-field beams, and the beam indexes may be determined based on the distance rings 1541, 1542, 1543, and 1544. Therefore, the base station may transmit CSI-RS through four near-field beams. The terminal may measure RSRP values for the CSI-RS received from the base station through the near-field beams, and may store the measured RSRP values corresponding to the indexes of the near-field beams as in Table 11.

The indexes of the near-field beams may be transmitted from the base station to the terminal through a resource indicator such as a CRI of the CSI-RS or through newly defined RRC signaling. The number of bits of the near-field beam index may be determined as in Equation 5 described above. In addition, as in the example described above, an MSB of the index may be set to '1' to inform the terminal that the beam is a near-field beam.

When transmitting CSI-RS, the base station may transmit, to the terminal, information on a beam through which the CSI-RS is transmitted, that is, a near-field beam index of the beam through which the base station transmits the CSI-RS, together through a DCI, MAC-CE, RRC reconfiguration message, or newly defined RRC signaling message. Therefore, the terminal may identify through which beam the CSI-RS is transmitted based on the beam index received from the base station.

The terminal may identify whether near-field beam(s) having an RSRP value equal to or greater than the RSRP threshold illustrated in Table 9 exist, based on the measurement results of the RSRP values for the near-field beams. In the example of Table 9, since the RSRP threshold is set to 90dBm, a near-field beam having an RSRP value equal to or greater than the RSRP threshold in Table 11 may be the base station near-field beam #3. Therefore, the terminal may report a second report message including the measured RSRP value for the CSI-RS and the beam index corresponding to the measured RSRP value to the base station.

The second report message may be transmitted from the terminal to the base station in a CSI reporting procedure using UCI. As another example, the second report message may be transmitted to the base station as a response to a request of the base station.

For example, reporting of the RSRP value for the CSI-RS may be performed such that the base station delivers, to the terminal, beam performance reporting instruction information through *UEInformationRequest* in an RRC signaling message. The terminal may transmit the measured RSRP values to the base station through *UEInformationResponse* in response to *UEInformationRequest* of the RRC signaling message.

As another example, the base station may instruct beam performance reporting to the terminal through an SIB or a newly defined RRC signaling message defined to instruct beam performance reporting. The terminal that receives the SIB or the newly defined RRC signaling message may report beam performance information to the base station by using a measurement report, UE assistance information, or a newly defined RRC signaling message.

According to the third exemplary embodiment described above, compared with a case in which sweeping of all beams is performed without any prior information, beam sweeping for a very large number of beams may not be performed. Therefore, there is an advantage that a time of a beam management procedure for finding an optimal beam through beam sweeping may be reduced.

**[Fourth exemplary embodiment: case in which prior information regarding a location of a terminal is available]**

Hereinafter, a beam management method when the base station has, as prior information for the terminal, location information of the terminal will be described. The base station may determine a beam to be used for communication with the terminal by utilizing the location information of the terminal. A method of utilizing the location information of the terminal according to the present disclosure may determine whether beam sweeping using far-field beams or beam sweeping using near-field beams is to be performed based on the location information. In addition, when the terminal is located in a near-field region, beam sweeping and beam focusing may be performed by limiting grids around the location of the terminal when performing near-field beam sweeping, thereby allowing an optimal beam to be found quickly. In addition, when hierarchical beam sweeping can be performed, by repeatedly performing more segmented beam sweeping for an angle-distance domain region corresponding to a beam selected in the previous step, a beam having higher performance may be found. In the hierarchical beam sweeping, the number of hierarchies (number of times segmented beams are used) may be determined in consideration of latency requirement of a service provided to the terminal. A specific operation thereof will be described with reference to the accompanying drawings.

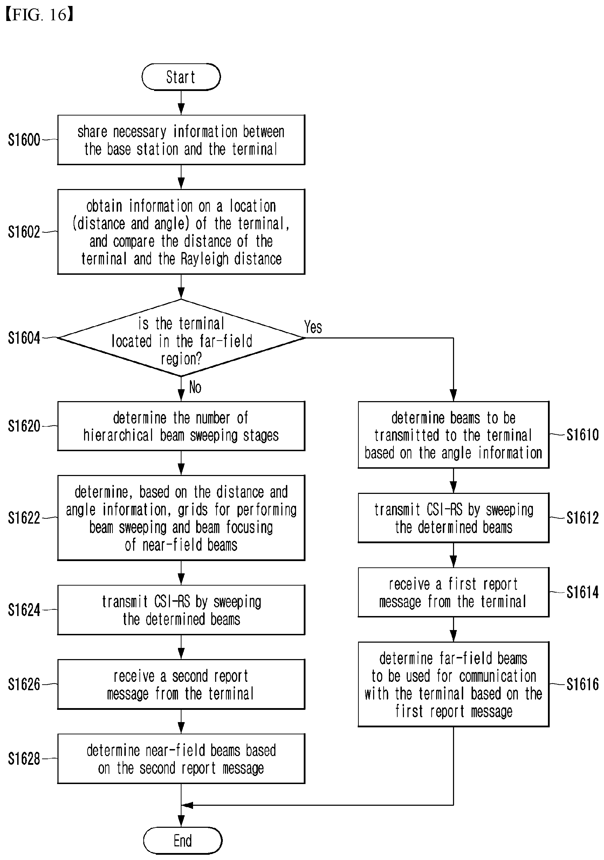

FIG. 16 is a flowchart according to a procedure for beam management when a base station has location information of a terminal.

Prior to describing with reference to FIG. 16, a base station may be assumed to be a base station having an XL-MIMO antenna panel. A configuration of the base station may have the same configuration as described above with reference to FIG. 10. A terminal may also have the same configuration as described above with reference to FIG. 10.

In step S1600, the base station may share information required for beamforming with the terminal. For example, the base station may transmit information on an RSRP threshold to the terminal in advance. The information on the RSRP threshold may be information for determining beam suitability when configuring far-field beams and/or near-field beams. The base station may also provide, to the terminal, information on a number of distance rings that the base station can use. Since the base station knows information on a size of the XL-MIMO antenna panel, when the base station knows a size of an antenna panel of the terminal, the base station may calculate and store a Rayleigh distance for distinguishing between a far-field region and a near-field region. In addition, the base station may provide the Rayleigh distance to the terminal in advance. The Rayleigh distance may be calculated according to Equation 1 or Equation 2 described above, and hereinafter, a case is assumed in which Equation 2 is used. In the present disclosure, the Rayleigh distance is merely an example for facilitating understanding of the present disclosure, and when another indicator that may replace the Rayleigh distance may be set, the indicator may also be utilized.

In step S1602, the base station may obtain location information of the terminal. In FIG. 16, for convenience of description, a procedure in which the base station obtains information on an angle between the base station and the terminal in step S1602 is exemplified. However, the base station may obtain, as prior information, the location information of the terminal in step S1600. The location information of the terminal may include a distance from the base station to the terminal and a relative angle from the base station to the terminal. The location information of the terminal may be obtained by the base station as side information for a positioning service. Hereinafter, a case is assumed in which the base station obtains the location information of the terminal in step S1602 by reading information that the base station has in advance as prior information.

In step S1602, the base station may compare the distance between the base station and the terminal with the Rayleigh distance. In step S1604, the base station may determine whether the terminal is located in the far-field region or located in the near-field region based on the comparison result between the distance of the terminal and the Rayleigh distance. When the determination result in step S1604 indicates that the terminal is located in the far-field region, the base station may proceed to step S1610. When the determination result in step S1604 indicates that the terminal is located in the near-field region, the base station may proceed to step S1620.

In step S1610, the base station may determine beams to be transmitted to the terminal based on the relative angle from the base station or the XL-MIMO antenna of the base station to the terminal. In this case, since the beams are determined based on the angle, the beams may be determined in the same manner as described above in the third exemplary embodiment.

In step S1612, the base station may transmit CSI-RS to the terminal by sweeping the determined beams. In this case, the respective beams may include beam indexes as described above. The beam indexes may be determined by one of the methods: the method for distinguishing far-field beams and near-field beams using an MSB, or the method for distinguishing far-field beams and near-field beams depending on inclusion of a distance ring index.

In step S1612, the terminal may measure RSRP values for the CSI-RS received through the beams transmitted by the base station. Then, the terminal may map and store the measured RSRP values and beam indexes corresponding to the measured RSRP values. The terminal may generate a first report message including beam indexes for beams having RSRP values equal to or greater than the RSRP threshold among the measured RSRP values and the measured RSRP values corresponding to the beam indexes. Then, the terminal may report the first report message to the base station.

In step S1614, the base station may receive the first report message from the terminal.

In step S1616, the base station may determine a far-field beam to be used for communication with the terminal based on the first report message received from the terminal.

The case of proceeding to step S 1620 may correspond to a case in which the terminal is located in the near-field region of the base station as described above. In step S1620, the base station may determine a number of hierarchical beam sweeping stages. The hierarchical beam sweeping may be a procedure of finding an optimal beam through two or more stages. For example, when two-stage beam sweeping is performed, the base station may specify an approximate location of the terminal by performing beam sweeping using relatively wide beams. Then, the base station may perform a procedure of finding a more precise location of the terminal by using more segmented beams for the location of the terminal acquired through the wide beams.

First, a case in which the number of hierarchical beam sweeping stages is set as in Table 12 below will be described.

[Table 12]

| Electromagnetic wave region determination information | Near field |
|---|---|
| Hierarchical beam sweeping support of the terminal | True |
| Number of hierarchical beam sweeping stages | 2 |

The hierarchical beam sweeping may or may not be supported based on various factors such as latency requirement information of a service provided to the terminal, beam widths supported by the base station, a load of the base station, hierarchical beam sweeping support of the terminal, or other related factors. Information on the hierarchical beam sweeping support of the terminal may be received in advance from the terminal in step S1600 described above.

According to the fourth exemplary embodiment of the present disclosure, since the base station knows both the distance between the terminal and the base station and the relative angle from the base station to the terminal, the base station may use methods other than the Rayleigh distance-based determination technique to determine an electromagnetic wave region of the terminal. For example, the base station may select one of the Rayleigh distance-based determination technique, a phase difference-based determination technique, and an RSRP-based determination technique to determine the electromagnetic wave region.

In the example of Table 12, a case in which the terminal supports hierarchical beam sweeping is indicated as 'true' in the first row. When a service provided to the terminal is a service extremely sensitive to delay, hierarchical beam sweeping may be set to 'false' indicating that hierarchical beam sweeping is not supported even when both the terminal and the base station support hierarchical beam sweeping.

In the example of Table 12, a case in which the number of hierarchical beam sweeping stages is determined as 2 is exemplified. In this case, when determining the number of hierarchical beam sweeping stages, the base station may determine the number of hierarchical beam sweeping stages based on information received from the terminal and information held by the base station. For example, as a delay requirement of the terminal becomes stricter, it becomes difficult to take a long time in the hierarchical beam sweeping process, so the number of hierarchical beam sweeping stages may be set to a small value.

In addition, as a beam width supported by the base station is narrow and as the number of distance rings that may be operated is large, the angle-distance domain may be further segmented, so the number of hierarchical beam sweeping stages may be set to be large. The base station may transmit information on the determined number of hierarchical beam sweeping stages to the terminal in advance. The information on the number of hierarchical beam sweeping stages may be transmitted in advance in step S1600 described above. As another method, when the terminal is determined to be located in the near-field region, the base station may provide information on the number of hierarchical beam sweeping stages to the terminal through separate signaling (not illustrated in FIG. 16).

The information on the number of hierarchical beam sweeping stages may be transmitted from the base station to the terminal in various message forms. For example, the information on the number of hierarchical beam sweeping stages may be transmitted to the terminal through an SIB, DCI, or newly defined RRC signaling message for transmitting the information on the number of hierarchical beam sweeping stages.

When the base station is a base station in which the number of hierarchical beam sweeping stages is flexibly changed according to a total traffic amount and the like, the base station may transmit the information by using a DCI format defined for transmission of the information on the number of hierarchical beam sweeping stages.

When using the new DCI format, the base station may preconfigure, to the terminal, information on a maximum number of hierarchical beam sweeping stages through a MAC-CE or an RRC signaling message. Then, within the maximum number of hierarchical beam sweeping stages, a number of hierarchical beam sweeping stages may be determined for each situation based on the DCI.

The example of FIG. 16 may correspond to a case in which the number of hierarchical beam sweeping stages is set to 1. A case in which the number of hierarchical beam sweeping stages is set to 2 will be additionally described as a modified content of FIG. 16 below.

In step S1622, the base station may determine grids for beam sweeping and beam focusing of near-field beams based on information on the distance and the angle. For example, when the terminal lies in a first beam direction and a second beam direction in which the base station is able to perform beamforming based on the location information of the terminal, and when the terminal is located within the second distance ring and the third distance ring, the base station may configure four grids. More specifically, within a range of the second distance ring, two grids may be determined for the first beam direction and the second beam direction, and within a range of the third distance ring, two grids may be determined for the first beam direction and the second beam direction.

In step S1624, the base station may transmit CSI-RS to the terminal by performing beam sweeping with near-field beams in directions of the determined grids. In this case, beam indexes may be allocated to the near-field beams for the respective grids. Therefore, in step S1624, the terminal may receive CSI-RS transmitted through the near-field beams swept by the base station. The terminal may measure RSRP values for the received CSI-RS. The terminal may map and store the measured RSRP values and beam indexes corresponding to the measured RSRP values. The terminal may compare the RSRP threshold set in step S1600 with the measured RSRP values and may determine a highest RSRP value among RSRP value(s) equal to or greater than the RSRP threshold and a beam index corresponding thereto. The terminal may transmit a second report message including the highest RSRP value among the RSRP value(s) equal to or greater than the RSRP threshold and the beam index corresponding thereto to the base station.

In step S1626, the base station may receive the second report message from the terminal. In this case, when the number of hierarchical beam sweeping stages of the base station is 2 or greater, the base station may increase a hierarchical beam sweeping count value by 1 and may proceed to step S1622. In step S1622, the determined grid may be divided again into two or more grids to determine detailed grids for beam sweeping.

Then, in step S1624, the base station may transmit CSI-RS by sweeping beams corresponding to the determined grids. The procedure up to step S1626 may proceed in the same manner. Then, when the hierarchical beam sweeping count value is equal to the number of hierarchical beam sweeping stages, step S1628 may be performed.

In step S1628, the base station may determine a near-field beam selected based on the second report message as a beam for communication with the terminal.

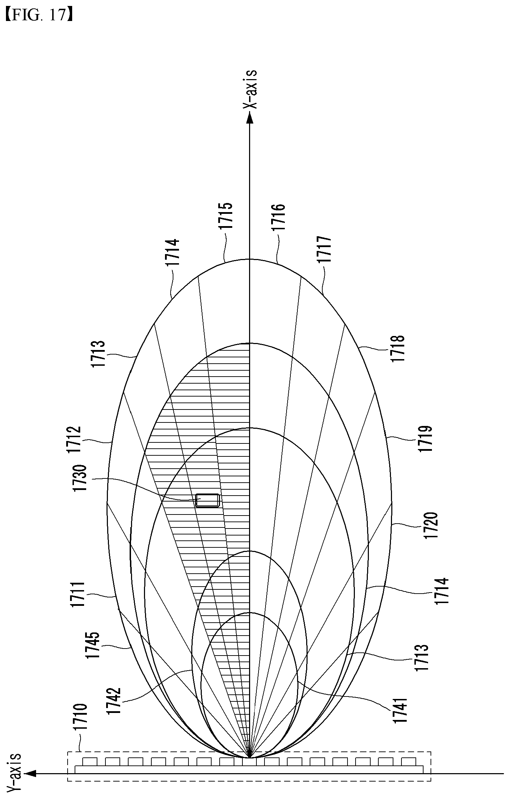

The operation described above with reference to FIG. 16 will be described with reference to FIG. 17 and tables exemplified below.

FIG. 17 is a conceptual diagram illustrating a method of sweeping and transmitting near-field beams when a base station having an XL-MIMO antenna knows location information of a terminal.

As shown in FIG. 17, a base station may be assumed to be a base station having an XL-MIMO antenna panel 1710. In the example of FIG. 17, when the base station radiates beams through the XL-MIMO antenna panel 1710, an X-axis corresponds to a direction viewed by the XL-MIMO antenna panel 1710, and a direction parallel to a plane of the XL-MIMO antenna panel 1710 is exemplified as a Y-axis.

A case is assumed in which the base station knows location information of the terminal 1730 as prior information. In addition, a case is assumed in which the terminal 1730 is located within a near-field region. When the base station has location information of the terminal as prior information, a size of a prior location-based candidate set may be determined as in Table 13 below.

[Table 13]

| Prior information (location information) between the base station and the terminal | $d_{prior}$, $\theta_{prior}$ |
|---|---|
| A nearest distance ring and a far-field beam index for the terminal | $i_{prior}$, $j_{prior}$ |
| Size of the near-field beam candidate set based on prior information | 9 |

Table 13 is an example for a case in which prior information between the base station and the terminal is location information of the terminal. In Table 13, $d_{prior}$ may denote a distance from the base station or the XL-MIMO antenna panel of the base station to the terminal, and $\theta_{prior}$ may denote a relative angle from the base station to the terminal. In Table 13, $i_{prior}$ may correspond to an index of the nearest distance ring for the terminal, and $j_{prior}$ may be a far-field beam index corresponding to the direction of the terminal.

When the size of the prior-information-based candidate set is determined based on the near-field beam corresponding to the location of the terminal and grids adjacent to the location of the terminal, the number of grids adjacent to the location of the terminal may be 8. Therefore, the size of the prior-information-based near-field beam candidate set including the near-field beam corresponding to the location of the terminal may be 9. In the fourth exemplary embodiment, prior information is location information, and grids described in FIG. 17 may represent near-field candidate beams.

The size of the near-field beam candidate set based on the location information may be determined according to various criteria such as a beam width supported by the base station and/or a delay requirement of the terminal. By appropriately selecting the size of the near-field beam candidate set based on the prior information and the number of hierarchical beam sweeping stages, time resources and computational complexity used for beam adjustment may be reduced or communication performance may be improved by forming finer beams. For example, as a delay requirement of a service provided to the terminal becomes shorter, the size of the near-field candidate set based on the prior information may be set to a small value, so that time consumed in the beam sweeping process may be reduced. As another example, as an antenna array size of the base station becomes very large and intervals of adjacent near-field beams and distance rings become finer, the size of the near-field candidate set based on the prior information may become large. When the size of the candidate set becomes large as described above, communication performance may be measured for various combinations of near-field beams, so an optimal beam may be selected.

The size of the near-field beam candidate set based on the prior information may be set to be the same in all stages of hierarchical beam sweeping. As another example, the size of the near-field beam candidate set based on the prior information may be flexibly set in each stage of hierarchical beam sweeping in consideration of near-field beams and distance ring intervals that the base station can segment.

A case in which the size of the near-field beam candidate set based on the prior information is 9 is illustrated in FIG. 17. According to the example of FIG. 17, the base station may perform beam sweeping in 10 directions, that is, a first direction 1711, a second direction 1712, a third direction 1713, a fourth direction 1714, a fifth direction 1715, a sixth direction 1716, a seventh direction 1717, an eighth direction 1718, a ninth direction 1719, and a tenth direction 1720. In addition, distance rings illustrated in FIG. 17 may include a first distance ring 1741 closest to the XL-MIMO antenna panel 1710, a second distance ring 1742 second closest to the XL-MIMO antenna panel 1710, a third distance ring 1743 third closest to the XL-MIMO antenna panel 1710, a fourth distance ring 1744 fourth closest to the XL-MIMO antenna panel 1710, and a fifth distance ring 1745 farthest from the XL-MIMO antenna panel 1710.

A case is exemplified in which the terminal 1730 is located at a fifth grid defined by the third distance ring 1743 and the fourth direction 1714. Grids closest to the grid where the terminal is located may be eight grids as follows.

In FIG. 17, the eight grids may be a first grid defined by the second distance ring 1742 in the third direction 1713, a second grid defined by the third distance ring 1743 in the third direction 1713, a third grid defined by the fourth distance ring 1744 in the third direction 1713, a fourth grid defined by the second distance ring 1742 in the fourth direction 1714, a sixth grid defined by the fourth distance ring 1744 in the fourth direction 1714, a seventh grid defined by the second distance ring 1742 in the fifth direction 1715, an eighth grid defined by the third distance ring 1743 in the fifth direction 1715, and a ninth grid defined by the fourth distance ring 1744 in the fifth direction 1715. A number of each grid may be set in a manner different from the above. The grid numbers may be numbers given for facilitating description of the present disclosure.

Therefore, the base station may transmit CSI-RS to the terminal 1730 through beam sweeping such that beams are focused on nine grids. The terminal may receive CSI-RS through the nine beams and may measure RSRP values for the received CSI-RS. The terminal may map and store the measured RSRP values and base station beam indexes corresponding to the measured RSRP values. In this case, when hierarchical beam sweeping is performed, availability of a corresponding grid, that is, availability of the corresponding beam for the next hierarchical beam sweeping, may be determined. As a threshold for determining a beam that may be used for the hierarchical beam sweeping, the same RSRP threshold as described above, or a new RSRP threshold may be used. A highest RSRP threshold rather than a new RSRP threshold may be used as the threshold for determining a beam that may be used for the hierarchical beam sweeping. A reason why the highest RSRP threshold may be used is that beams are swept by using location information of the terminal, so beams that the base station is to use are already determined as near-field beams or far-field beams based on the distance information.

Table 14 below is a table exemplifying the measured RSRP values, beam indexes, and availability for hierarchical beam sweeping according to the present disclosure.

[Table 14]

| Base station candidate beam (Beam index) | RSRP measured by the terminal | Availability for hierarchical beam sweeping |
|---|---|---|
| BS near-field beam #1 (0000) | RSRP_32 | False |
| BS near-field beam #2 (0001) | RSRP_44 | False |
| BS near-field beam #3 (0010) | RSRP_56 | False |
| BS near-field beam #4 (0011) | RSRP_63 | False |
| BS near-field beam #5 (0100) | RSRP_75 | True |
| BS near-field beam #6 (0101) | RSRP_66 | False |
| BS near-field beam #7 (0110) | RSRP_51 | False |
| BS near-field beam #8 (0111) | RSRP_40 | False |
| BS near-field beam #9 (1000) | RSRP_28 | False |

In the near-field beam sweeping process, the base station may map near-field beam indexes to near-field candidate beams and may transmit CSI-RS to the terminal together with the near-field beam indexes. The terminal may receive CSI-RS transmitted through the near-field beams and may measure RSRP values for the received CSI-RS. The terminal may map and store the near-field beam indexes and the RSRP values measured by the terminal for the CSI-RS as exemplified in Table 14.

Then, the terminal may select an optimal beam based on the RSRP values measured for the CSI-RS received through the respective beams. According to the example of Table 14, the terminal may select a base station near-field beam #5 having the highest RSRP value. Therefore, when hierarchical beam sweeping is applied, the terminal may perform hierarchical beam sweeping by further segmenting the base station near-field beam #5. The base station near-field beam #5 may be a beam corresponding to the fifth grid where the terminal is located in the example of FIG. 17.

The near-field beam indexes described above may be transmitted to the terminal through a resource indicator such as a CRI of the CSI-RS. As another example, the near-field beam indexes may be transmitted to the terminal by using a newly defined RRC signaling message for indicating the near-field beam indexes. In addition, a number of bits of the near-field beam indexes may be determined in the manner described in Equation 5 described above.

Since the size of the near-field beam candidate set based on the prior information is determined as 9 in Table 13, a number of near-field beams that the base station may form in the near-field beam sweeping process may also be 9. In Table 14, since the number of near-field beams is 9, a case in which 4 bits are allocated to distinguish each candidate beam is exemplified.

When transmitting CSI-RS, the base station may transmit, to the terminal, information on a beam through which the CSI-RS is transmitted, that is, a near-field beam index of the base station, which transmits the CSI-RS. In this case, a DCI, MAC-CE, RRC reconfiguration message, or newly defined RRC signaling message for indicating the near-field beam index of the base station according to the present disclosure may be used to transmit the near-field beam index of the base station. Through this, the terminal may identify through which beam the received CSI-RS is transmitted.

The terminal may report, to the base station, a second report message including measurement results for the beams through which the received CSI-RS is transmitted. In this case, the second report message may be reported in various forms. For example, the second report message may use UCI, and the RSRP values for the CSI-RS and beam indexes corresponding to the RSRP values may be transmitted to the base station in a CSI reporting process.

As another example, the base station may instruct the terminal to report the RSRP values for the CSI-RS through *UEInformationRequest* in an RRC signaling message. Then, the terminal may report information included in the second report message to the base station through *UEInformationResponse*.

As still another example, the base station may instruct the terminal to report the RSRP values through an SIB or a newly defined RRC signaling message for instructing performance reporting. The terminal may report information of the second report message to the base station by using a measurement report, UE assistance information, or a newly defined RRC signaling message in response to the SIB or the newly defined RRC signaling message.

Assuming the case in which the number of hierarchical beam sweeping stages in Table 12 is set to 2, the base station may complete the hierarchical beam sweeping by repeating the procedures of Table 13 and Table 14 in the angle-distance domain corresponding to the base station near-field beam #5 based on the information included in the second report message.

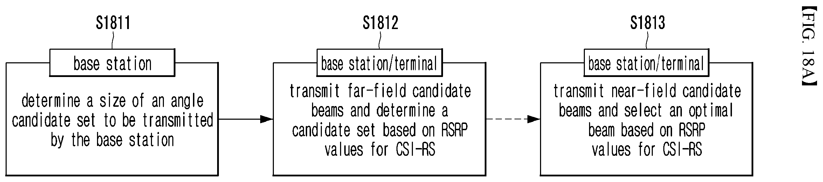

When the operations according to the first exemplary embodiment to the fourth exemplary embodiment described above are simplified, the operations may be illustrated as in FIGS. 18A to 18D.

FIG. 18A is a simplified flowchart of a procedure for selecting an optimal beam between a base station and a terminal according to the first exemplary embodiment of the present disclosure.

Prior to referring to FIG. 18A, it should be noted that the first exemplary embodiment corresponds to a case in which no prior information regarding a terminal exists. Therefore, a base station may have none of a location of the terminal, a distance from the base station to the terminal, and a relative angle from the base station to the terminal.

In step S1811, the base station may determine a size of an angle candidate set for beams that the base station is to transmit to the terminal. Determination of the size of the angle candidate set for beams that the base station is to transmit may be determined based on Table 2 described in FIG. 12.

In step S1812, the base station or the terminal may transmit far-field candidate beams. In this case, the far-field candidate beams may include a reference signal capable of measuring quality of the beams, such as CSI-RS. In addition, the candidate beams may include identifiers capable of identifying the respective candidate beam. Since this has been described in detail in the first exemplary embodiment, a redundant description is omitted. The terminal may receive CSI-RS from the base station through the far-field candidate beams and may measure RSRP values for the received CSI-RS. The measured RSRP values may be reported to the base station through a first report message together with beam indexes. The base station may select an angle candidate set based on the first report message as described in Table 3. In this case, when an optimal far-field candidate beam is determined, step S1813 may not be performed. In order to indicate that step S1813 may not be performed, an arrow from step S1812 to step S1813 is illustrated as a dotted line.

In step S1813, the base station may transmit near-field candidate beams to the terminal. The near-field candidate beams may include a reference signal capable of measuring quality of the beams, such as CSI-RS. In addition, the near-field candidate beams may include identifiers capable of identifying the respective near-field candidate beam. Since this has been described in detail in the first exemplary embodiment, a redundant description is omitted. The terminal may measure RSRP values for the CSI-RS received through the near-field candidate beams. The measured RSRP values and corresponding beam indexes may be reported to the base station through the second report message. The base station may select an optimal beam based on the second report message. This selection procedure may be performed as described in Table 6.

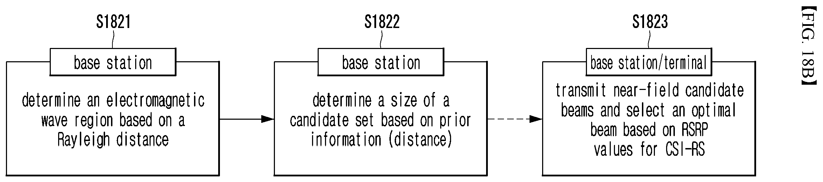

FIG. 18B is a simplified flowchart of a procedure for selecting an optimal beam between a base station and a terminal according to the second exemplary embodiment of the present disclosure.

Prior to referring to FIG. 18B, it should be noted that the second exemplary embodiment corresponds to a case in which prior information regarding a terminal exists. In the second exemplary embodiment, the prior information may be information on a distance between the base station and the terminal.

In step S1821, the base station may determine an electromagnetic wave region based on the distance information. The electromagnetic wave region may be a near-field region or a far-field region. This may be determined based on Equation 1 or Equation 2 described above.

In step S1822, the base station may determine a size of a candidate set for configuring beams to the terminal based on the distance from the base station to the terminal acquired as the prior information.

In step S1823, the base station may transmit near-field candidate beams. It should be noted that the operation of transmitting far-field beams is not illustrated in FIG. 18B. The base station may transmit near-field candidate beams to the terminal. In this case, the near-field candidate beams may include a reference signal capable of measuring quality of the beams, such as CSI-RS. In addition, the near-field candidate beams may include identifiers capable of identifying the respective near-field candidate beam. Since this has been described in detail in the first exemplary embodiment and the second exemplary embodiment, a redundant description is omitted. The terminal may receive CSI-RS from the base station through the near-field candidate beams and may measure RSRP values for the received CSI-RS. The measured RSRP values may be reported to the base station through a second report message together with beam indexes. The base station may select an angle candidate set based on the first report message as described in Table 3. In this case, when far-field candidate beams are determined, step S1813 may not be performed. In order to indicate that step S1813 may not be performed, an arrow from step S1812 to step S1813 is illustrated as a dotted line.

In step S1813, the base station may transmit near-field candidate beams. The near-field candidate beams may include a reference signal capable of measuring quality of the beams, such as CSI-RS. In addition, the candidate beams may include identifiers capable of identifying the respective candidate beam. Since this has been described in detail in the first exemplary embodiment, a redundant description is omitted. The terminal may measure RSRP values for the CSI-RS received through the near-field candidate beams. The measured RSRP values and corresponding beam indexes may be reported to the base station through the second report message. The base station may select an optimal beam based on the second report message. This selection procedure may be performed as described in Table 8.

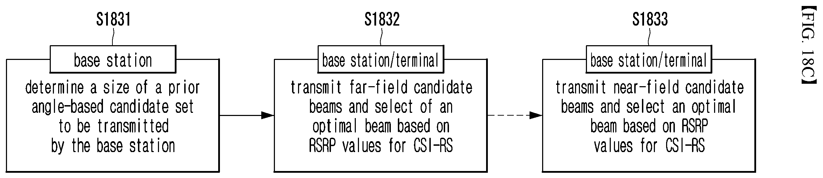

FIG. 18C is a simplified flowchart of a procedure for selecting an optimal beam between a base station and a terminal according to the third exemplary embodiment of the present disclosure.

Prior to referring to FIG. 18C, it should be noted that the third exemplary embodiment corresponds to a case in which prior information regarding a terminal exists. In the third exemplary embodiment, the prior information may be information on a relative angle from the base station to the terminal.

In step S1831, the base station may determine a size of a beam candidate set based on the information on the angle as the prior information to be transmitted to the terminal. This may be set by the method as described in Table 9.

In step S1832, the base station may first transmit far-field candidate beams. In this case, the far-field candidate beams may include a reference signal capable of measuring quality of the beams, such as CSI-RS. In addition, the far-field candidate beams may include identifiers capable of identifying the respective far-field candidate beam. Since this has been described in detail in the first exemplary embodiment to the third exemplary embodiment, a redundant description is omitted. The terminal may receive CSI-RS through the respective beams and may measure RSRP values for the received CSI-RS. The terminal may select an optimal beam by using the measured RSRP values. When RSRP value(s) equal to or greater than an RSRP threshold exist among the measure RSRP values for the CSI-RS received through the far-field candidate beams, the optimal beam selection procedure may be terminated. When none of the measured RSRP values for the CSI-RS received through the far-field candidate beams is equal to or greater than the RSRP threshold, the base station proceeds to step S1833. Therefore, since progress from step S1832 to step S1833 is determined based on a result of step S1832, a connection arrow is illustrated as a dotted line.

In step S1833, the base station may transmit near-field candidate beams to the terminal. In this case, the near-field candidate beams may include a reference signal capable of measuring quality of the beams, such as CSI-RS. In addition, the near-field candidate beams may include identifiers capable of identifying the respective near-field candidate beams. Since this has been described in detail in the first exemplary embodiment to the third exemplary embodiment, a redundant description is omitted. The base station may receive CSI-RS from the terminal through the near-field candidate beams and may measure RSRP values for the received CSI-RS. The measured RSRP values may be reported to the base station through a second report message together with beam indexes. The base station may determine the near-field candidate beams as described in Table 11.

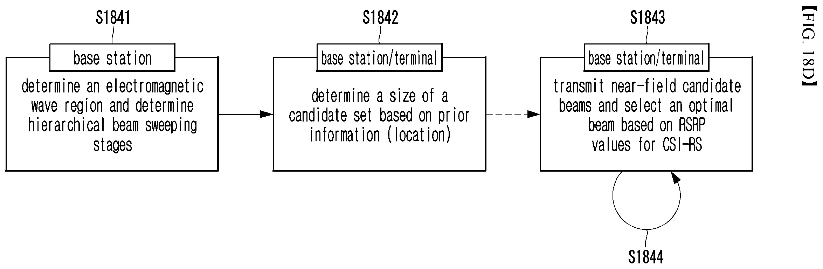

FIG. 18D is a simplified flowchart of a procedure for selecting an optimal beam between a base station and a terminal according to the fourth exemplary embodiment of the present disclosure.

Prior to referring to FIG. 18D, it should be noted that the fourth exemplary embodiment corresponds to a case in which prior information regarding a terminal exists. In the fourth exemplary embodiment, the prior information may be location information of the terminal. The location information of the terminal may include a relative angle from the base station to the terminal and a distance of the terminal from the base station.

In step S1841, the base station may determine an electromagnetic wave region in which the terminal is located based on the distance information. This determination may be made based on the Rayleigh distance as described above. Other cases that do not use the Rayleigh distance have been described in the fourth exemplary embodiment, so a redundant description is omitted. The base station may determine whether the terminal is located in a far-field region or located in a near-field region based on the distance information between the terminal and the base station.

The example of FIG. 18D may be an exemplary embodiment for a case in which the terminal is located in the near-field region. Therefore, in step S1841, the base station may determine a number of hierarchical beam sweeping stages. The hierarchical beam sweeping may be performed only once or may be performed two or more times. Since the method of determining a number of hierarchical beam sweeping stages has been described in the fourth exemplary embodiment, a redundant description is omitted.

In step S1842, the base station may determine a size of a candidate set for transmitting near-field beams based on the location information as the prior information. Since a candidate set for transmitting near-field beams has been described in Table 13 of the fourth exemplary embodiment, a redundant description is omitted.

In step S1843, the base station may transmit near-field candidate beams to the terminal. In this case, the near-field candidate beams may include a reference signal capable of measuring quality of the beams, such as CSI-RS. In addition, the near-field candidate beams may include identifiers capable of identifying the respective near-field candidate beams. Since this has been described in detail in the first exemplary embodiment to the fourth exemplary embodiment, a redundant description is omitted. The terminal may receive CSI-RS from the base station through the near-field candidate beams and may measure RSRP values for the received CSI-RS. The measured RSRP values may be reported to the base station through a second report message together with beam indexes. The base station may determine whether hierarchical beam sweeping is to be performed based on near-field beam information as described in Table 14.

In step S1844, the base station may repeatedly perform step S1843 as many times as the number of hierarchical beam sweeping stages set in step S1841.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a base station, the method comprising:

   sharing first information and prior information for beamforming with a terminal;
   determining, based on the prior information, whether the terminal is located in a near-field region;
   based on the terminal being determined to be located in the near-field region, determining grids for transmitting near-field beams for beam sweeping and beam focusing, based on the first information;
   transmitting a reference signal by sweeping the near-field beams so that the near-field beams are respectively focused on the determined grids;
   receiving a first measurement report message for the reference signal from the terminal; and
   determining a near-field beam for communicating with the terminal based on the first measurement report message,
   wherein the first information includes information on a number of distance rings for separating the near field region, and the number of the distance rings is two or more.

2. The method of claim 1, wherein the prior information includes a distance from the base station to the terminal, and each of the near-field beams uses a spherical-wave beam.

3. The method of claim 1, further comprising:

   based on the terminal being determined to be located in a far-field region, transmitting the reference signal to the terminal by sweeping far-field beams, beam indexes for identifying the far-field beams being transmitted through the respective far-field beams;
   receiving a second measurement report message from the terminal, the second measurement report message including a measurement value for the reference signal and index information for each of the far-field beams; and
   determining a far-field beam for communicating with the terminal based on the second measurement report message,
wherein each of the far-field beams uses a plane-wave beam.

4. The method of claim 3, wherein the prior information further includes information on an angle of the terminal, and a beam sweeping region of the far-field beams is determined based on the angle of the terminal.

5. The method of claim 1, wherein the grids are respectively determined based on the distance rings, the distance rings being determined based on beam directions for beamforming toward the terminal and predetermined separation distances from the base station.

6. The method of claim 1, wherein the prior information further includes information on an angle of the terminal, and the grids for transmitting the near-field beams for beam sweeping and beam focusing are determined based on the angle of the terminal.

7. The method of claim 1, wherein the first information further includes information on a reception power threshold.

8. The method of claim 7, wherein the first measurement report message includes two or more measured reference signal received power (RSRP) values equal to or greater than the reception power threshold and beam indexes corresponding to the two or more measured RSRP values, and the near-field beam for communicating with the terminal is selected as a beam having a beam index corresponding to a highest RSRP value among the two or more measured RSRP values.

9. The method of claim 7, wherein the first measurement report message includes two or more RSRP values equal to or greater than the reception power threshold and beam indexes corresponding to the two or more measured RSRP values, the near-field beam for communicating with the terminal is determined by considering at least one of interference with another communication node or a load of the base station.

10. The method of claim 1, wherein the prior information is obtained from additional information indirectly acquired from a positioning service for the terminal or is determined based on delay information of a signal received from the terminal.

11. The method of claim 1, further comprising:

based on a determination of whether the terminal is located in the near-field region being impossible based on the prior information, transmitting the reference signal by sweeping far-field beams for an entire sweeping region of a far-field region;
receiving a third measurement report message from the terminal; and
based on a received power value included in the third measurement report message corresponding to a far-field beam having a received power equal to or greater than a preset threshold, configuring the far-field beam having the received power equal to or greater than the preset threshold as a beam for communicating with the terminal.

12. The method of claim 11, further comprising:

based on a received power value included in the third measurement report message not corresponding to a far-field beam having a received power equal to or greater than the preset threshold, determining grids for beam sweeping and beam focusing of near-field beams based on distance rings configured in a beam direction corresponding to the far-field beam having the received power equal to or greater than the preset threshold;
transmitting, to the terminal, the reference signal through near-field beam sweeping based on the determined grids;
receiving, from the terminal, a fourth measurement report message including a received power value for the reference signal transmitted through the near-field beam sweeping; and
determining, based on the fourth measurement report message, a near-field beam having a highest received power value among the near-field beams as the near-field beam for communicating with the terminal.

13. A base station comprising at least one processor, wherein the at least one processor causes the base station to perform:

sharing first information and prior information for beamforming with a terminal;
determining, based on the prior information, whether the terminal is located in a near-field region;

based on the terminal being determined to be located in the near-field region, determining grids for transmitting near-field beams for beam sweeping and beam focusing, based on the first information;

transmitting a reference signal by sweeping the near-field beams so that the near-field beams are respectively focused on the determined grids;

receiving a first measurement report message for the reference signal from the terminal; and

determining a near-field beam for communicating with the terminal based on the first measurement report message,

wherein the first information includes information on a number of distance rings for separating the near field region, and the number of the distance rings is two or more.

14. The base station of claim 13, wherein the prior information includes a distance from the base station to the terminal, and each of the near-field beams uses a spherical-wave beam.

15. The base station of claim 13, wherein the at least one processor further causes the base station to perform:

based on the terminal being determined to be located in a far-field region, transmitting the reference signal to the terminal by sweeping far-field beams, beam indexes for identifying the far-field beams being transmitted through the respective far-field beams;

receiving a second measurement report message from the terminal, the second measurement report message including a measurement value for the reference signal and index information for each of the far-field beams; and

determining a far-field beam for communicating with the terminal based on the second measurement report message,

wherein each of the far-field beams uses a plane-wave beam.

16. The base station of claim 15, wherein the prior information further includes information on an angle of the terminal, and a beam sweeping region of the far-field beams is determined based on the angle of the terminal.

17. The base station of claim 13, wherein the grids are respectively determined based on the distance rings, the distance rings being determined based on beam directions for beamforming toward the terminal and predetermined separation distances from the base station.

18. The base station of claim 13, wherein the prior information further includes information on an angle of the terminal, and the grids for transmitting the near-field beams for beam sweeping and beam focusing are determined based on the angle of the terminal.

19. The base station of claim 13, wherein the at least one processor further causes the base station to perform:

based on a determination of whether the terminal is located in the near-field region being impossible based on the prior information, transmitting the reference signal by sweeping far-field beams for an entire sweeping region of a far-field region;

receiving a third measurement report message from the terminal; and

based on a received power value included in the third measurement report message corresponding to a far-field beam having a received power equal to or greater than a preset threshold, configuring the far-field beam having the received power equal to or greater than the preset threshold as a beam for communicating with the terminal.

20. The base station of claim 19, wherein the at least one processor further causes the base station to perform:

based on a received power value included in the third measurement report message not corresponding to a far-field beam having a received power equal to or greater than the preset threshold, determining grids for beam sweeping and beam focusing of near-field beams based on distance rings configured in a beam direction corresponding to the far-field beam having the received power equal to or greater than the preset threshold;

transmitting, to the terminal, the reference signal through near-field beam sweeping based on the determined grids;

receiving, from the terminal, a fourth measurement report message including a received power value for the reference signal transmitted through the near-field beam sweeping; and

determining, based on the fourth measurement report message, a near-field beam having a highest received power value among the near-field beams as the near-field beam for communicating with the terminal.

【FIG. 1】

100

【FIG. 2】

200

220

210

memory

ROM    RAM

processor

270

input
interface
device    ～240

output
interface
device    ～250

storage
device    ～260

transceiver    ～230

**[FIG. 3]**

【FIG. 4A】

【FIG. 4B】

【FIG. 5】

| system frame #1023 | system frame #0 | system frame #1 |
|---|---|---|

| system frame #1023 | system frame #0 | system frame #1 | system frame #2 |
|---|---|---|---|

10ms

| subframe #0 | subframe #1 | subframe #2 | subframe #3 | subframe #4 | subframe #5 | subframe #6 | subframe #7 | subframe #8 | subframe #9 |
|---|---|---|---|---|---|---|---|---|---|

1ms

half framer #0 (5ms)

half framer #1 (5ms)

【FIG. 6】

subframe (1ms)

| slot #0 | slot #1 | ... | slot #n |

【FIG. 7】

slot

| #0 | #1 | #2 | #3 | #4 | #5 | #6 | #7 | #8 | #9 | #10 | #11 | #12 | #13 |

OFDM symbol

REG

N subcarriers

RE

N OFDM symbols

【FIG. 8】

【FIG. 9】

【FIG. 10】

Start

S1000 — share information required between
the base station and the terminal

S1002 — transmit CSI-RS to the terminal
through far-field beams using
a beam-sweeping scheme

S1004 — receive a first report message including
RSRP value(s) for far-field beam(s)
from the terminal

S1006 — do beam(s)
satisfying communication performance
exist?

Yes

No

S1010 — determine an angle candidate set for
beam sweeping and beam focusing
of near-field beams

S1020 — determine, among the beam(s)
satisfying communication
performance, one far-field beam
to be used for communication

S1012 — determine angle-distance domain grids
from the angle candidate set, and
transmit CSI-RS to the terminal through
near-field beams for the determined grids

S1014 — receive a second report message
including RSRP value(s) for
near-field beam(s) from the terminal

S1016 — determine a near-field beam based on
quality information received from the terminal

End

【FIG. 11A】

【FIG. 11B】

【FIG. 11C】

【FIG. 12】

```
                        ┌──────────┐
                        │  Start   │
                        └────┬─────┘
                             ▼
              ┌───────────────────────────────────┐
   S1200──────│  share information required between│
              │    the base station and the terminal│
              └─────────────────┬─────────────────┘
                                ▼
              ┌───────────────────────────────────┐
              │ obtain information on a distance between the│
   S1202──────│ terminal and the base station, and compare │
              │ the distance between the terminal and the  │
              │ base station with a Rayleigh distance       │
              └─────────────────┬─────────────────┘
                                ▼
                        ◇ is it possible ◇        No      ┌──────────────────────┐
   S1204──────  ◇ to determine a field region to which the ◇──────▶│ perform the method of│────S1230
                        ◇ terminal belongs? ◇              │  the first embodiment │
                                │ Yes                      └──────────────────────┘
                                ▼
                        ◇ is the terminal ◇       Yes
   S1206──────  ◇ located in the far-field region? ◇────────────────────────┐
                                │ No                                        │
                                ▼                                          ▼
              ┌───────────────────────────────┐      ┌──────────────────────────┐
   S1220──────│ determine grids for beam sweeping│    │ transmit CSI-RS to the terminal│────S1210
              │ and beam focusing of near-field  │    │ through the far-field beams by  │
              │ beams based on the distance      │    │ using a beam sweeping scheme    │
              └───────────────┬───────────────┘      └──────────────┬───────────┘
                              ▼                                     ▼
              ┌───────────────────────────────┐      ┌──────────────────────────┐
   S1222──────│ transmit CSI-RS to the terminal through the│ │ receive a first report message│────S1212
              │ near-field beams for the determined grids  │ │ including RSRP value(s) for    │
              └───────────────┬───────────────┘      │ the far-field beam(s)          │
                              ▼                        │ from the terminal              │
              ┌───────────────────────────────┐      └──────────────┬───────────┘
   S1224──────│ receive a second report message including│          ▼
              │ RSRP value(s) for the near-field beam(s)  │ ┌──────────────────────────┐
              │ from the terminal                         │ │ determining a far-field beam│────S1214
              └───────────────┬───────────────┘          │ for communication based on  │
                              ▼                            │ the first report message    │
              ┌───────────────────────────────┐          └──────────────┬───────────┘
   S1226──────│ determine a near-field beam for communication│           │
              │ based on the second report message           │           │
              └───────────────┬───────────────┘              │
                              └──────────────┬───────────────┘
                                             ▼
                                       ┌──────────┐
                                       │   End    │
                                       └──────────┘
```

【FIG. 13】

【FIG. 14】

```
                              ( Start )
                                  │
                                  ▼
S1400 ──┌─────────────────────────────────────┐
        │  share necessary information between │
        │      the base station and the terminal │
        └─────────────────────────────────────┘
                                  │
                                  ▼
S1402 ──┌─────────────────────────────────────┐
        │  obtain information on an angle between │
        │  the terminal and the base station, and │
        │      determine far-field beams to be    │
        │     transmitted to the terminal based   │
        │       on the prior information (angle)  │
        └─────────────────────────────────────┘
                                  │
                                  ▼
S1404 ──┌─────────────────────────────────────┐
        │     transmit CSI-RS to the terminal   │
        │        by sweeping the far-field beams │
        └─────────────────────────────────────┘
                                  │
                                  ▼
S1406 ──┌─────────────────────────────────────┐
        │     receive a first report message for │
        │      far-field beam(s) from the terminal │
        └─────────────────────────────────────┘
                                  │
                                  ▼
                          ╱ are there beam(s)  ╲        Yes
S1408 ──────────────────◇ satisfying communication ◇───────────┐
                          ╲    performance?      ╱              │
                                  │ No                          │
                                  ▼                             ▼
S1410 ──┌─────────────────────────────┐   ┌─────────────────────────────┐ S1420
        │ determine grids for transmitting CSI-RS │ │  determine a far-field beam │
        │ to the terminal based on the first report │ │  to be used for communication │
        │  message and the prior information (angle) │ └─────────────────────────────┘
        └─────────────────────────────┘                       │
                                  │                             │
                                  ▼                             │
S1412 ──┌─────────────────────────────┐                       │
        │ transmit CSI-RS to the terminal by sweeping │        │
        │ near-field beams for the determined grids │          │
        └─────────────────────────────┘                       │
                                  │                             │
                                  ▼                             │
S1414 ──┌─────────────────────────────┐                       │
        │   receive a second report message for │               │
        │   near-field beam(s) from the terminal │              │
        └─────────────────────────────┘                       │
                                  │                             │
                                  ▼                             │
S1416 ──┌─────────────────────────────┐                       │
        │    determine a near-field beam for │                  │
        │ communication with the terminal based │               │
        │      on the second report message  │                  │
        └─────────────────────────────┘                       │
                                  │◄────────────────────────────┘
                                  ▼
                              ( End )
```

【FIG. 15】

【FIG. 16】

【FIG. 17】

**[FIG. 18A]**

S1811

| base station |
|---|
| determine a size of an angle candidate set to be transmitted by the base station |

S1812

| base station/terminal |
|---|
| transmit far-field candidate beams and determine a candidate set based on RSRP values for CSI-RS |

S1813

| base station/terminal |
|---|
| transmit near-field candidate beams and select an optimal beam based on RSRP values for CSI-RS |

**[FIG. 18B]**

S1821

| base station |
| --- |
| determine an electromagnetic wave region based on a Rayleigh distance |

S1822

| base station |
| --- |
| determine a size of a candidate set based on prior information (distance) |

S1823

| base station/terminal |
| --- |
| transmit near-field candidate beams and select an optimal beam based on RSRP values for CSI-RS |

【FIG. 18C】

S1831 — base station: determine a size of a prior angle-based candidate set to be transmitted by the base station

S1832 — base station/terminal: transmit far-field candidate beams and select of an optimal beam based on RSRP values for CSI-RS

S1833 — base station/terminal: transmit near-field candidate beams and select an optimal beam based on RSRP values for CSI-RS

【FIG. 18D】

S1841 — base station

determine an electromagnetic wave region and determine hierarchical beam sweeping stages

S1842 — base station/terminal

determine a size of a candidate set based on prior information (location)

S1843 — base station/terminal

transmit near-field candidate beams and select an optimal beam based on RSRP values for CSI-RS

S1844

## INTERNATIONAL SEARCH REPORT

| International application No. |
| --- |
| **PCT/KR2024/014055** |

| A. | CLASSIFICATION OF SUBJECT MATTER |
| --- | --- |

**H04B 7/06**(2006.01)i; **H04W 64/00**(2009.01)i; **H04W 24/08**(2009.01)i; **H04B 17/318**(2015.01)i; **H04W 72/21**(2023.01)i; **H04W 72/23**(2023.01)i

According to International Patent Classification (IPC) or to both national classification and IPC

| B. | FIELDS SEARCHED |
| --- | --- |

Minimum documentation searched (classification system followed by classification symbols)

H04B 7/06(2006.01); H04B 17/373(2015.01); H04B 7/08(2006.01); H04W 24/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 근거리 필드 빔(near-field beam), 근거리 필드 영역(near-field area), 거리 링 (distance ring), 빔 스위핑(beam sweeping), 빔 포커싱(beam focusing), 참조 신호(reference signal)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CUI, Mingyao et al. Near-Field Rainbow: Wideband Beam Training for XL-MIMO. In: IEEE Transactions on Wireless Communications. 21 November 2022, Vol. 22, Issue 6, pp. 3899-3912, E-ISSN: 1558-2248.<br>See pages 3900-3909. | 1-20 |
| A | LIU, Wang et al. Deep Learning Based Beam Training for Extremely Large-Scale Massive MIMO in Near-Field Domain. In: IEEE Communications Letters. 26 September 2022, Vol. 27, Issue 1, pp. 170-174, E-ISSN: 1558-2558.<br>See pages 170-172. | 1-20 |
| A | CN 114499613 A (QINGHUA UNIV.) 13 May 2022 (2022-05-13)<br>See paragraphs [0004]-[0062]; claim 1; and figure 2. | 1-20 |
| A | US 2022-0200676 A1 (QUALCOMM INC.) 23 June 2022 (2022-06-23)<br>See paragraphs [0150]-[0163]; claims 1-3; and figures 9-10. | 1-20 |

☑ Further documents are listed in the continuation of Box C. ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 December 2024** | **18 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/014055** |

## C. DOCUMENTS CONSIDERED TO BE RELEVANT

| Category* | Citation of document, with indication, where appropriate, of the relevant passages | Relevant to claim No. |
| --- | --- | --- |
| A | US 2023-0163828 A1 (TELEFONAKTIEBOLAGET LM ERICSSON (PUBL)) 25 May 2023 (2023-05-25)<br>See paragraphs [0075]-[0108]; and figures 10-11. | 1-20 |

Form PCT/ISA/210 (second sheet) (July 2022)

**INTERNATIONAL SEARCH REPORT**
Information on patent family members

International application No.

**PCT/KR2024/014055**

| Patent document cited in search report | | | Publication date (day/month/year) | Patent family member(s) | | | Publication date (day/month/year) |
|---|---|---|---|---|---|---|---|
| CN | 114499613 | A | 13 May 2022 | WO | 2023-103356 | A1 | 15 June 2023 |
| US | 2022-0200676 | A1 | 23 June 2022 | CN | 116601884 | A | 15 August 2023 |
| | | | | EP | 4268379 | A1 | 01 November 2023 |
| | | | | US | 11621758 | B2 | 04 April 2023 |
| | | | | WO | 2022-140056 | A1 | 30 June 2022 |
| US | 2023-0163828 | A1 | 25 May 2023 | EP | 4122117 | A1 | 25 January 2023 |
| | | | | EP | 4122117 | A4 | 06 December 2023 |
| | | | | WO | 2021-188027 | A1 | 23 September 2021 |

Form PCT/ISA/210 (patent family annex) (July 2022)